# EUROPEAN PATENT APPLICATION

(11) **EP 4 716 278 A1**
(43) Date of publication of application: **25.03.2026**
(21) Application number: 23937200.6
(22) Date of filing: 25.09.2023
(51) Int. Cl.: H04W 24/02, H04B 7/04

(54) **INFORMATION RECEIVING METHOD AND APPARATUS AND INFORMATION SENDING METHOD AND APPARATUS**

(30) Priority: 15.05.2023 WO PCT/CN2023/094349
(71) Applicant: Fujitsu Limited, Kawasaki-shi, Kanagawa 211-8588 (JP)
(72) Inventor: LU, Yiwen, Beijing 100022 (CN); ZHU, Jing, Beijing 100022 (CN); ZHANG, Lei, Beijing 100022 (CN)
(74) Representative: Haseltine Lake Kempner LLP
(86) International application number: PCT/CN2023/121280
(87) International publication number: WO 2024/234524

(57) **Abstract**

Embodiments of this disclosure provide an information reception method, an information transmission method and apparatuses thereof. The information reception method is applicable to a terminal equipment and includes: receiving first CSI-RS resource configuration information, and/or, first CSI reporting configuration information, by the terminal equipment; wherein the first CSI-RS resource configuration information configures at least one first CSI-RS resource set, each of the first CSI-RS resource sets comprising at least one CSI-RS resource; the first CSI reporting configuration information at least configures first CSI reporting information to which M sub-configurations correspond; wherein the first CSI-RS resource configuration information is related to the first CSI reporting information to which the M sub-configurations correspond in the first reporting configuration information; where, M is an integer greater than or equal to 1.

## Description

### Technical Field

This disclosure relates to the field of communication technologies.

### Background

As an important component of global new infrastructure construction, the fifth generation (5G) communication network has experienced rapid development worldwide in recent years. With the construction of 5G, Active Antenna Units (AAUs) have been widely commercialized. Compared with the Remote Radio Units (RRUs) used in 3G and 4G, AAUs have higher power consumption, so the energy consumption of 5G devices will also increase exponentially.

5G has defined three major business types: Enhanced Mobile Broadband (eMBB), Massive Machine Type of Communication (mMTC), and Ultra Reliable Low Latency Communication (URLLC). This has led to an increasing number of 5G small packet burst services, with base stations operating 24 hours a day without interruption. The daily energy consumption of 5G sites will also be more than twice that of 4G.

In addition, 3GPP has introduced key technologies such as Massive MIMO and larger RF bandwidth in the 5G era. 5G supports higher data rates and larger data traffic, requiring more transmission bandwidth. High frequency deployment will also be the main frequency band for 5G's future expansion. The high-frequency transmission characteristics limit the coverage range of the sites, resulting in denser deployment of 5G sites, and increasing the energy consumption of the sites will bring huge operating cost pressure to operators.

The larger the network scale, the higher the energy consumption of operators. Taking the data released by the Chinese Ministry of Industry and Information Technology as an example, the energy consumption growth in 2022 will reach about 80% compared to 2015. Therefore, network energy conservation is of great significance for saving operating costs, and 5G network energy conservation is an urgent problem to be solved.

In order to achieve energy conservation, network devices can perform energy-saving processing in the time domain, frequency domain, spatial domain, and/or energy domain according to the network load situation. For example, in the spatial and energy domains, network devices can turn off some antennas when the load is low to achieve energy conservation. In the time domain, network devices can introduce cell level discontinuous transmission/reception technology to prevent them from transmitting and/or receiving signals during certain sleep periods to achieve energy conservation.

On the other hand, with the continuous development of mobile communication technology and the deepening of mobile network deployment, low-frequency spectrum resources are becoming increasingly scarce. In order to meet the demand for higher transmission rates and larger system capacity, 5G systems have considered higher spectrum, such as millimeter waves. Rich high-frequency spectrum resources can provide continuous large bandwidth, but at the same time, there are also problems such as poor millimeter wave transmission characteristics, high transmission loss, and signal blockage caused by obstruction.

To this end, the 5G system has introduced a series of technical solutions such as digital+analog hybrid beamforming, which converts omnidirectional signals into several beams and uses extremely narrow beams for alignment transmission. This way, the carried signals can propagate further and the communication link quality will be better.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

It was found by the inventors that when a network device adjusts antenna configurations (such as aiming at energy-saving), how to enable a terminal equipment to perform CSI measurement efficiently and accurately has become an urgent problem to be solved in network energy-saving techniques.

In order to solve at least one of the above problems or other similar problems, embodiments of this disclosure provide an information reception method, an information transmission method and apparatuses thereof.

According to one aspect of the embodiments of this disclosure, there is provided an information reception method, applicable to a terminal equipment, the method including: receiving first CSI-RS resource configuration information, and/or, first CSI reporting configuration information, by the terminal equipment; wherein the first CSI-RS resource configuration information configures at least one first CSI-RS resource set, each of the first CSI-RS resource sets including at least one CSI-RS resource; the first CSI reporting configuration information at least configures first CSI reporting information to which M sub-configurations correspond; wherein the first CSI-RS resource configuration information is related to the first CSI reporting information to which the M sub-configurations correspond in the first reporting configuration information; where, M is an integer greater than or equal to 1.

According to another aspect of the embodiments of this disclosure, there is provided an information reception apparatus, configured in a terminal equipment, the apparatus including: a receiving unit configured to receive first CSI-RS resource configuration information, and/or, first CSI reporting configuration information; wherein the first CSI-RS resource configuration information configures at least one first CSI-RS resource set, each of the first CSI-RS resource sets including at least one CSI-RS resource; the first CSI reporting configuration information at least configures first CSI reporting information to which M sub-configurations correspond; wherein the first CSI-RS resource configuration information is related to the first CSI reporting information to which the M sub-configurations correspond in the first reporting configuration information; where, M is an integer greater than or equal to 1.

According to a further aspect of the embodiments of this disclosure, there is provided an information transmission method, applicable to a network device, the method including: transmitting first CSI-RS resource configuration information, and/or, first CSI reporting configuration information, by the network device; wherein the first CSI-RS resource configuration information configures at least one first CSI-RS resource set, and each of the first CSI-RS resource sets includes at least one CSI-RS resource; the first CSI reporting configuration information at least configures first CSI reporting information to which M sub-configurations correspond; wherein the first CSI-RS resource configuration information is related to the first CSI reporting information to which the M sub-configurations correspond in the first reporting configuration information; where M is an integer greater than or equal to 1.

According to still another aspect of the embodiments of this disclosure, there is provided an information transmission apparatus, configured in a network device, the apparatus including: a transmitting unit configured to transmit first CSI-RS resource configuration information, and/or, first CSI reporting configuration information; wherein the first CSI-RS resource configuration information configures at least one first CSI-RS resource set, and each of the first CSI-RS resource sets includes at least one CSI-RS resource; the first CSI reporting configuration information at least configures first CSI reporting information to which M sub-configurations correspond; wherein the first CSI-RS resource configuration information is related to the first CSI reporting information to which the M sub-configurations correspond in the first reporting configuration information; where M is an integer greater than or equal to 1.

An advantage of the embodiments of this disclosure exists in that the terminal equipment may accurately perform CSI reporting according to the first CSI-RS resource configuration information and/or the first CSI reporting configuration information, and the network device may correctly perform reception and demodulation on the received CSI, thereby improving accuracy and integrity of the measurement reporting, and ensuring performances of data transmission.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiments of the disclosure may be combined with elements and features depicted in one or more additional drawings or embodiments. Moreover, in the drawings, like reference numerals designate corresponding parts throughout the several views and may be used to designate like or similar parts in more than one embodiment.
FIG. 1 is schematic diagram of a communication system of the embodiments of this disclosure;
FIG. 2 is a schematic diagram of adjustment of a spatial domain/energy domain element of the embodiments of this disclosure;
FIG. 3 is a schematic diagram of an information reception method of the embodiments of this disclosure;
FIG. 4 is a schematic diagram of an information transmission method of the embodiments of this disclosure;
FIG. 5 is a schematic diagram of an information reception apparatus of the embodiments of this disclosure;
FIG. 6 is a schematic diagram of an information transmission apparatus of the embodiments of this disclosure;
FIG. 7 is a schematic diagram of a network device of the embodiments of this disclosure;
FIG. 8 is a schematic diagram of a terminal equipment of the embodiments of this disclosure; and
FIG. 9 is a schematic diagram of a correspondence between a sub-configuration and a CSI-RS resource ID of the embodiments of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G, new radio (NR) and 6G in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal equipment" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, a machine to machine (M2M) terminal, and a terminal supporting sidelink communication, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipment described above. "A device" in this text may refer to a network device, and may also refer to a terminal equipment.

Scenarios in the embodiments of this disclosure shall be described below by way of examples; however, this disclosure is not limited thereto.

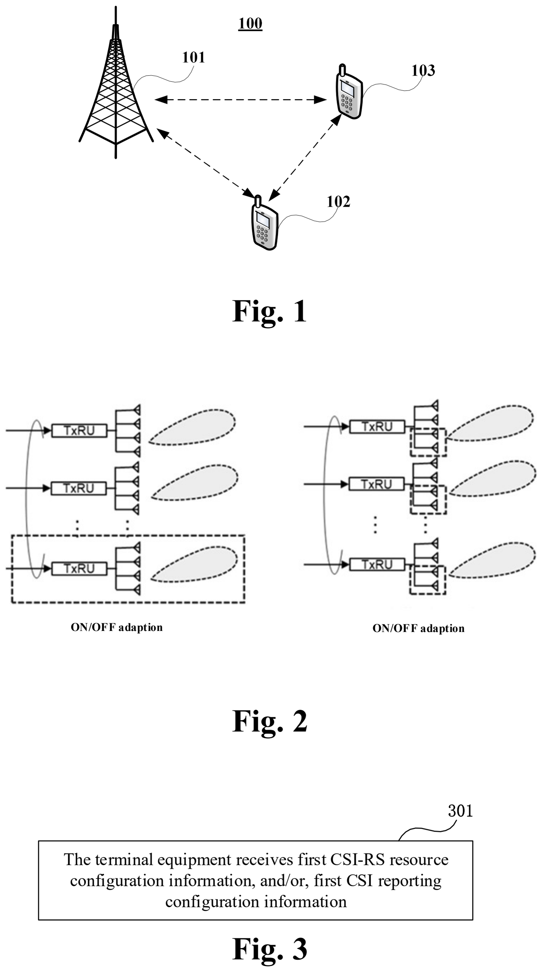

FIG. 1 is a schematic diagram of a communication system of the embodiments of this disclosure, in which a case where terminal equipment and a network device are taken as examples is schematically shown. As shown in FIG. 1, the communication system 100 may include a network device 101 and terminal equipment 102, 103. For the sake of simplicity, an example having only two terminal equipment and one network device is schematically given in FIG. 1; however, the embodiments of this disclosure is not limited thereto.

In the embodiments of this disclosure, existing services or services that may be implemented in the future may be performed between the network device 101 and the terminal equipment 102, 103. For example, such services may include but not limited to an enhanced mobile broadband (eMBB), massive machine type communication (mMTC), and ultra-reliable and low-latency communication (URLLC), etc.

It should be noted that FIG. 1 shows that two terminal equipment 102, 103 are both in coverage of the network device 101. However, this disclosure is not limited thereto, and the two terminal equipment 102, 103 may not be in coverage of the network device 101, or one terminal equipment 102 is in coverage of the network device 101 and the other terminal equipment 103 is out of coverage of the network device 101.

In the embodiments of this disclosure, high-layer signaling may be, for example, radio resource control (RRC) signaling; for example, it is referred to an RRC message, which includes an MIB, system information, and a dedicated RRC message; or, it is referred to an as an RRC information element (RRC IE). Higher-layer signaling may also be, for example, medium access control (MAC) signaling, or an MAC control element (MAC CE); however, this disclosure is not limited thereto.

In the embodiments of this disclosure, in a mobile communication system, a terminal equipment typically performs channel state information (CSI) measurement according to indications and configurations of a network device, and reports the measured CSI to the network device. When scheduling the terminal equipment, the network device may make reference to the CSI to schedule the terminal equipment to transmit in appropriate transmission schemes on suitable physical resources. Different terminal equipment may experience different physical channel conditions, and employing a CSI feedback mechanism allows for reasonable and efficient utilization of physical resources, thereby enhancing the overall efficiency of network transmissions.

In the CSI feedback mechanism of NR, the terminal equipment measures and reports reference signals primarily based on CSI configurations, the reference signals including CSI-RSs (channel state information-reference signals) and SSBs (synchronization signal blocks). The CSI configurations of NR are mainly divided into two parts, in which a first part is reference resources configured by the network device(CSI-RS resource configuration) for the terminal equipment for CSI measurement, and a second part is configuring the terminal equipment by the network device(CSI reporting configuration) for how to perform CSI reporting.

For example, the CSI-RS resource configuration (Resource settings) may be used for interference measurement and CSI channel measurement. Each CSI-RS resource configuration (Resource settings) contains S resource sets, each resource set containing Ks CSI-RS resources. An aperiodic resource configuration (Resource settings) may contain one or more resource sets. For a periodic semi-persistent resource configuration (Resource settings), when it is used for CSI acquisition, it can only contain one resource set.

Regarding a value of Ks:
- when it is used for CSI channel measurement, if a codebook type in the reporting configuration is 'Type I' (specifically including CodebookType='TypeISinglePanel' or 'TypeIMultiPanel'), Ks <= 32;
- when it is used for CSI channel measurement, if a codebook type in the reporting configuration is 'Type II' (specifically including CodebookType='typeII', 'typeII-PortSelection', 'typeII-r16', 'typeII-PortSelection-r16', 'typeII-PortSelection-r17'), Ks = 1. This is mainly because that a computational complexity of Type II is relatively high, posing a greater computational challenge for the terminal equipment. Therefore, the NR system relatively reduces the computational complexity of terminal equipment by restricting values of Ks.

A CSI report consists of two parts (part 1 and part 2), wherein CSI part 1 (also referred to as part 1) has a fixed payload size and indicates the number of information bits of CSI part 2. In CSI reporting, when current CSI measurement is used for CSI channel measurement, reported contents are defined according to different codebook types as follows:
- Type I CSI: part 1 includes an RI/CRI and a CQI of a first CW; and part 2 includes an LI and PMI, and further includes a CQI of a second CW when a rank is greater than 4;
- Type II CSI: part 1 includes an RI, a CQI and the number of non-zero wideband amplitude coefficients per layer; and part 2 includes an LI and PMI.

NR supports CSI-IM-based interference measurement, which is mainly used for measuring of neighbor cell interference. Power of the CSI-IM may be zero or non-zero. Signals measured on the CSI-IM are typically assumed to be PDSCHs of a neighbor cell. CSI-IM resources may be periodic or semi-persistent or aperiodic in the time domain. In general, resources in a CSI resource set of configured interference measurement should have a one-to-one correspondence with resources used for the channel measurement.

An NR system also supports interference measurement based on non-zero power (NZP) CSI-RSs. When an NZP CSI-RS resource is configured only for interference measurement, a UE assumes that each CSI-RS port corresponds to an interference transmission layer. The UE accumulates interference measurements of all interference layers, and interference of each layer needs to take its corresponding power factor into account. Such a scheme corresponds to pre-scheduled interference measurement. It should be noted that the measurement result of this interference NZP CSI-RS resource includes both inter-MU interference and inter-cell interference. In a case where an NZP CSI-RS resource is configured for both channel measurement and interference measurement, the terminal equipment (UE) may subtract the result of the channel measurement from signals after the channel measurement and takes a result as a result of interference measurement. Due to a lower density of the NZP CSI-RSs, the result of the channel measurement is not sufficiently accurate, consequently leading to less accurate result of the interference measurement. Therefore, the interference measurement based on the NZP CSI-RSs is more suitable for pre-scheduled measurement of inter-user interference and is only applicable to aperiodic CSI reporting. An NZP CSI-RS resource set used for interference measurement may contain multiple NZP CSI-RS resources, all of which being used for interference measurement, with a total number of ports not exceeding 18.

In the related art, CSI-RS resource configurations are RRC semi-static configurations, and the number of CSI-RS ports and time-frequency positions remain unchanged for a long period of time.

However, it was found by the inventors that in network energy-saving scenarios, to achieve the goal of network energy conservation, a feasible solution is that the network device adjusts antenna configurations used for serving for terminal equipment according to real-time demands of the network, such as the number of antenna elements, antenna ports, etc. According to limitations imposed by network device hardware, radio frequency implementations, etc., Release 18 (R18) primarily supports the following two energy-saving scenarios under the application.

FIG. 2 is an exemplary diagram of an energy-saving scenario according to the embodiments of this disclosure. The left side of FIG. 2 may be referred to as Type 1 adjustment, such as corresponding to energy-saving scenario 1, wherein all antennas (factors) associated with one logical antenna port are enabled or disabled, and such adjustment directly affects the number of antenna ports. The right side of FIG. 2 may be referred to as Type 2 adjustment, such as corresponding to energy-saving scenario 2, wherein a part of antennas (factors) associated with one logical antenna port are enabled or disabled, and such adjustment affects beamforming gains of the network device, thereby affecting transmission power of reference signals.

As shown in FIG. 2, energy-saving scenario 1 achieves network energy saving by closing some digital antenna ports. At the terminal equipment side, after different numbers of antenna ports are closed, the terminal equipment performs measurement according to different numbers of ports, and CSI information of different digital ports are generated. Consequently, 'nrofports' in the CSI resource configuration and/or N1N2 in the reporting configuration may have different values under different energy-saving configurations. Therefore, numbers of antenna port dimensions in a PMI matrix in CSI reported under different energy-saving sub-configurations are different. In most common energy-saving scenario 1, sub-configurations of different antenna ports may be distinguished by antenna port indication in a CSI-RS resource. For example, different antenna port subsets in the CSI-RS resource may correspond to closing configurations of different antenna ports.

Furthermore, while closing or adjusting the antenna configurations, energy saving may also be achieved by adjusting the transmission power. Specifically, through power offset-related information (Poweroffset) in the network configuration information, the terminal equipment may be enabled to perform CSI channel measurement according to different data transmission power assumptions and feedback to the network side, thereby providing a more accurate channel state for the energy-saving adjustment of the network device. The power adjustment may be configured simultaneously with both energy-saving scenarios 1 and 2, and achieve the goal and effect of energy saving together.

As shown in FIG. 2, in energy-saving scenario 2, network energy saving is achieved by dynamically adjusting the number of TXRUs/radio frequency antennas without adjusting the number of digital antenna ports. Therefore, in this case, 'nrofports' in CSI resource configurations and/or the N1N2 in the reporting configuration in different energy-saving sub-configurations may remain unchanged. The number of the antenna port dimensions in the PMI matrix in the reported CSI remains unchanged, hence, it may possibly be protocol transparent at the terminal equipment side. In most common energy-saving scenario 2, distinguishing different antenna port sub-configurations may be performed via different CSI-RS resources, for example, different resources may correspond to closing configurations of different antenna ports.

In the two energy-saving scenarios, all existing CSI resource configurations are unable to be well adapted and reused. For Type I codebooks, currently, all resources in a resource set correspond to identical antenna ports, and the terminal equipment can only select and report one CSI-RS resource for measurement and reporting. Therefore, the terminal equipment side is unable to report CSI results of different antenna ports. For Type II codebooks, currently, a resource set only supports one CSI-RS resource and is unable to support reporting a CRI (a best CSI-RS resource). Thus, the terminal equipment side is also unable to report CSI results of different antenna ports, especially in energy-saving scenario 2.

Therefore, if enhancement of different network energy-saving scenarios is performed on existing CSI resource configurations, contents of CSI reports also need corresponding enhancement; otherwise, the network side is unable to accurately acquire all CSI information under network energy-saving configurations, hence, efficient and accurate network energy conservation is unable to be achieved.

How to enable the terminal equipment to perform CSI measurement efficiently and accurately when the network device adjusts antenna configurations (such as for energy-saving purposes) has become a problem urgently needing to be solved.

### Embodiments of a first aspect

The embodiments of this disclosure provide an information reception method, which shall be described from a terminal equipment side. FIG. 3 is a schematic diagram of the information reception method of the embodiments of this disclosure. As shown in FIG. 3, the method includes:
301: the terminal equipment receives first CSI-RS resource configuration information, and/or, first CSI reporting configuration information;
wherein the first CSI-RS resource configuration information configures at least one first CSI-RS resource set, each of the first CSI-RS resource sets including at least one CSI-RS resource; the first CSI reporting configuration information at least configures first CSI reporting information to which M sub-configurations correspond; wherein the first CSI-RS resource configuration information is related to the first CSI reporting information to which the M sub-configurations correspond in the first reporting configuration information; where, M is an integer greater than or equal to 1.

Hence, the terminal equipment may accurately perform CSI reporting according to the first CSI-RS resource configuration information and/or the first CSI reporting configuration information, and the network device may correctly perform reception and demodulation on the received CSI, thereby improving accuracy and integrity of the measurement reporting, and ensuring performances of data transmission.

It should be noted that FIG. 3 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 3.

In some embodiments, the M sub-configurations refer to sub-configurations in an existing first CSI-RS resource configuration.

For example, taking that the first CSI-RS resource configuration configures 64 ports as an example, the M sub-configurations may refer to, for example, sub-configurations under 64 ports, such as M=3, corresponding to a first one of sub-configurations (64 ports), a second one of sub-configurations (32 ports), and a third one of sub-configurations (16 ports), respectively; for example, ports to which the M sub-configurations correspond are all subsets of the 64 ports configured by the first CSI-RS resource configuration.

In some embodiments, each first CSI-RS resource set includes at least one CSI-RS resource, for example, each first CSI-RS resource set includes 16 CSI-RS resources, etc., which shall be exemplified in detail in the following contents of this disclosure.

In some embodiments, that the first CSI reporting configuration information at least configures first CSI reporting information to which M sub-configurations correspond includes that the first CSI reporting configuration information includes at least on indication information, the indication information indicating port information of the M sub-configurations.

For example, the first CSI reporting configuration information may include multiple indication information or the one indication information. For example, for energy-saving scenario 1 shown in FIG. 2, multiple indication information may be used to respectively indicate port information for the M sub-configurations. For example, for energy-saving scenario 2 shown in FIG. 2, one indication information may configure port information of the M sub-configurations, wherein the port information of the M sub-configurations is identical, which shall be exemplified below respectively.

In some embodiments, the first CSI reporting configuration information includes M indication information, an *i-th* indication information in the M indication information including configuration information of Ni ports; where, the a value range of i is an integer in {1, M}; wherein the *i-th* indication information indicates the number of ports of an *i-th* sub-configuration in the M sub-configurations, wherein numbers of ports of each sub-configuration in the M sub-configurations are identical or different.

For example, first one of indication information includes configuration information of N1 ports to which a first one of sub-configurations corresponds, and so on. N2, N3... NM included in second to *M-th* indication information includes N2, N3... NM respectively correspond to configuration information of ports to which an *M-th* sub-configuration corresponds.

For example, N1> N2> N3...> NM, for example, taking that M=3 as an example, N1=64, N2=32, N3=16, wherein ports of a second one of sub-configurations and a third one of sub-configurations may be a subset of ports of the first one of sub-configurations, for example, 32 ports of the second one of sub-configurations are half of 64 ports of the first one of sub-configurations.

For example, N1=N2=N3...=NM, wherein numbers of ports to which the M sub-configurations correspond are identical, for example, all of them are 32.

For example, the above multiple indication information may be applied to energy-saving scenario 1.

In some embodiments, the first CSI reporting configuration information includes one indication information, the one indication information indicating the number of ports of the M sub-configurations, wherein numbers of ports in each sub-configuration in the M sub-configurations are identical.

For example, one indication information directly indicates the number N of ports of the M sub-configurations, wherein numbers of ports to which the M sub-configurations correspond are identical, for example, N=4.

For example, if the numbers of the ports to which the M sub-configurations correspond are identical, but numbers of corresponding antennas of the numbers of ports are different, for example, M=4, and N=4, such as 32 physical antenna configurations (corresponding to the first one of sub-configurations), 16 physical antenna configurations (corresponding to the second one of sub-configurations), 12 physical antenna configurations (corresponding to the third one of sub-configurations) and 8 physical antenna configurations (corresponding to the fourth one of sub-configurations), under 4 ports. For example, the physical antenna configurations may be transparent to the terminal equipment side.

For example, the above one indication information may be applied to energy-saving scenario 2.

How to determine CSI-RS resources used for channel measurement of the M sub-configurations shall be described below by way of examples.

In some embodiments, each first CSI-RS resource set includes K CSI-RS resources, wherein each of the K CSI-RS resources is used to determine channel measurement of the M sub-configurations.

For example, K is an integer greater than or equal to 1, for example, K=16, and the first CSI-RS resource set contains 16 CSI-RS resources.

For example, for energy-saving scenario 1, taking that M=3 (there are three sub-configurations) as an example, all of the 16 CSI-RS resources may be used to measure channel information of sub-configurations with ports 64, 32, and 16, respectively. For example, reference may be made to existing techniques for a specific measurement method, which is not limited in this disclosure does not limit it, and the terminal equipment performs reporting based on a result after the measurement (which shall be described in detail later in this description).

In some embodiments, CSI-RS resources with which each sub-configuration information in the M sub-configurations is associated are identical, wherein the M sub-configurations are associated with all CSI-RS resources in the first CSI-RS resource set in the first CSI-RS resource configuration information.

For example, for energy-saving scenario 1, taking that K=2 and M=2 as examples, CSI reporting information of 2 sub-configurations may be configured in the first CSI reporting configuration information, and the first CSI-RS resource set in the first CSI-RS resource configuration information associated with the reporting information contains K=2 CSI-RS resources, such as {CSI-RS #1, CSI-RS #2}, wherein the CSI-RS resources associated with the first one of sub-configurations are {CSI-RS #1, CSI-RS #2}, and the CSI-RS resources associated with the second one of sub-configurations are also {CSI-RS #1, CSI-RS #2}.

For example, the network device will not configure the terminal equipment with sub-configurations with CSI-RS resources of {CSI-RS #1, CSI-RS #2} and CSI-RS resources of {CSI-RS #2, CSI-RS #3}, or the terminal equipment does not expect/is not configured with sub-configurations with CSI-RS resources of {CSI-RS #1, CSI-RS #2} and CSI-RS resources of {CSI-RS #2, CSI-RS #3}.

In some embodiments, in the first CSI reporting configuration information to which the M sub-configurations correspond, a first part of sub-configurations in the M sub-configurations are configured with power offset, while a second part of sub-configurations in the M sub-configurations are not configured with power offset.

For example, a part of sub-configurations in the M sub-configurations are configured with power offset, and remaining sub-configurations in the M sub-configurations are not configured with power offset.

For example, power offsets of different sub-configurations are denoted by power offset indices, and reference may be made to the related art for specific contents related to the power offsets, which is not limited in this disclosure. For example, power offset 0 indicates that a current power offset value is 0 or the terminal equipment is not configured with power offset, and power offset 1 indicates that a current power offset value is 3dB, etc., which is not limited in this disclosure.

In some embodiments, in a case where the second part of sub-configurations in the M sub-configurations are not configured with power offsets, the terminal equipment determines that a value of a current power offset of the second part of sub-configurations is 0.

For example, for a sub-configuration that is not configured with a power offset, the terminal equipment assumes that a value of a power offset to which the sub-configuration corresponds is 0, or that a power offset to which the sub-configuration corresponds is fixed (default), such as power offset 0.

For example, for energy-saving scenario 1, taking that K=2 and M=2 as examples, the first one of sub-configurations {CSI-RS #1, CSI-RS #2} (with power offset 1) and the second one of sub-configurations {CSI-RS #1, CSI-RS #2} (without power offset, or with power offset 0) are configured in the first CSI report configuration information.

In some embodiments, all sub-configuration information in the first CSI reporting configuration information configuring information of the M sub-configurations is configured with power offsets.

For example, all the M sub-configurations are configured with power offsets. For example, for energy-saving scenario 1, taking K=2 and M=2 as an example, the first one of sub-configurations {CSI-RS #1, CSI-RS #2} (with power offset 1) and the second one of sub-configurations {CSI-RS #1, CSI-RS #2} (with power offset 2) are configured in the first CSI report configuration information.

In some embodiments, each first CSI-RS resource set includes K CSI-RS resources; where, K=M, and one of the K CSI-RS resources is used to determine channel measurement of one of the M sub-configurations.

For example, K is an integer greater than or equal to 1. For example, K=M, and the first CSI-RS resource set contains 3 CSI-RS resources.

For example, for energy-saving scenario 2, taking that M=4 (there are four sub-configurations) as an example, the four CSI-RS resources correspond to four sub-configurations respectively, and each CSI-RS resource is used to measure channel information of a sub-configuration. For example, reference may be made to the related art for a specific measurement method, which is not limited in this disclosure. The terminal equipment performs reporting based on results of measurement (which shall be described later in this description).

In some embodiments, each first CSI-RS resource set includes Z CSI-RS resource groups, wherein an *m-th* CSI-RS resource group in the Z CSI-RS resource groups is related to Zm CSI-RS resources in H CSI-RS resources; where, Zm is a positive integer and Zm≤H; where *m-th* sub-configuration information to which the *m-th* CSI-RS resource group corresponds includes CSI-RS resource identifiers (IDs) of the Zm CSI-RS resources; where, 1≤ m≤ M.

In some embodiments, Z=M, and the Z CSI-RS resource groups correspond one-to-one with the M sub-configurations.

For example, Z is an integer greater than or equal to 1, Z=M, and H=16. For example, the first CSI-RS resource set includes 3 CSI-RS resource groups and 16 CSI-RS resources, wherein the 3 CSI-RS resource groups correspond one-to-one with 3 sub-configurations.

For example, the above expression "a CSI-RS resource group" may also be replaced with "a CSI-RS resource list", etc., which is not limited in this disclosure.

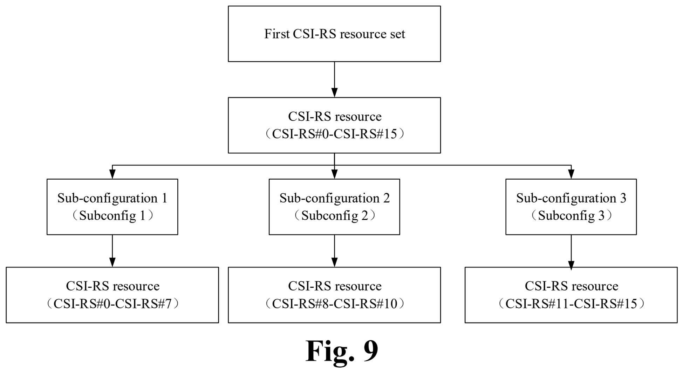

FIG. 9 is a schematic diagram of a correspondence between a sub-configuration and a CSI-RS resource ID of the embodiments of this disclosure. As shown in FIG. 9, CSI-RS resource identifiers (IDs) to which sub-configuration 1 in the CSI reporting configuration corresponds are CSI-RS #0-CSI-RS #7, and Z1=8, indicating that the first sub-configuration information is related to former eight CSI-RS resources CSI-RS #0-CSI-RS #7 in 16 CSI-RS resources; CSI-RS resource identifiers (IDs) to which sub-configuration 2 in the CSI reporting configuration corresponds are CSI-RS #8-CSI-RS #10, and Z2=3, indicating that the second sub-configuration information is related to a ninth to eleventh CSI-RS resources CSI-RS #8-CSI-RS #10 (total 3 resources) in 16 CSI-RS resources; CSI-RS resource identifiers (IDs) to which sub-configuration 2 in the CSI reporting configuration corresponds are CSI-RS #8-CSI-RS #10, and Z3=5, indicating that the third one of sub-configuration information is related to a twelfth to sixteenth CSI-RS resources CSI-RS #11-CSI-RS #15 (total 5 resources) in 16 CSI-RS resources.

As shown in FIG. 9, Z1=8, Z2=3, Z3=5, and a sum of values of Zm=8+3+5=16, i.e. equal to H; Z1, Z2 and Z3 may also be equal, and the sum of values of Zm may be less than H, which are not shown in FIG. 9; however, it is not limited in this disclosure.

In some implementations, none of the M sub-configurations is configured with a power offset in the first CSI reporting configuration information to which the M sub-configurations correspond.

In some embodiments, CSI-RS resources with which each of the M sub-configurations is associated are orthogonal, wherein the M sub-configurations are associated with at least one CSI-RS resource in the first CSI-RS resource set in the first CSI-RS resource configuration information.

For example, for energy-saving scenario 2, taking that K=6 and M=3 as examples, CSI reporting information of three sub-configurations may be configured in the first CSI reporting configuration information, and the first CSI-RS resource set in the first CSI reporting configuration information with which the CSI reporting information is associated includes K=6 CSI-RS resources. For example, the first one of sub-configurations may configure an associated CSI-RS list {CSI-RS #1, CSI-RS #2} in the first CSI reporting configuration information, the second one of sub-configurations may configure an associated CSI-RS list {CSI-RS #3, CSI-RS #4} in the first CSI reporting configuration information, the third one of sub-configurations may configure an associated CSI-RS list {CSI-RS #5, CSI-RS #6} in the first CSI reporting configuration information, and all of the first one of sub-configurations, second one of sub-configurations and third one of sub-configurations are not configured with power offsets (without power offsets).

In some implementations, in the first CSI reporting configuration information to which the M sub-configurations correspond, all of the M sub-configurations are configured with power offsets.

In some implementations, the CSI-RS resources with which each of the M sub-configurations is associated are orthogonal or identical.

For example, for energy-saving scenario 2, taking that K=4 and M=4 as examples, CSI reporting information of 4 sub-configurations may be configured in the first CSI reporting configuration information, and the first CSI-RS resource set in the first CSI reporting configuration information with which the CSI reporting information is associated includes K=4 CSI-RS resources. For example, the first one of sub-configurations may configure an associated CSI-RS list {CSI-RS #1, CSI-RS #2} in the first CSI reporting configuration information, and power offset 1 is configured; the second one of sub-configurations may configure an associated CSI-RS list {CSI-RS #1, CSI-RS #2} in the first CSI reporting configuration information, and power offset 2 is configured; the third one of sub-configurations may configure an associated CSI-RS list {CSI-RS #3, CSI-RS #4} in the first CSI reporting configuration information, and power offset 1 is configured; and the fourth sub-configuration may configure an associated CSI-RS list {CSI-RS #3, CSI-RS #4} in the first CSI reporting configuration information, and power offset 2 is configured.

In some implementations, in a case where the CSI-RS resources associated with each sub-configuration in the M sub-configurations are orthogonal, the power offsets to which the M sub-configurations correspond are different or identical.

For example, the above first one of sub-configurations may configure an associated CSI-RS list {CSI-RS #1, CSI-RS #2} in the first CSI reporting configuration information, and is configured with power offset 1; the above third one of sub-configurations may configure an associated CSI-RS list {CSI-RS #3, CSI-RS #4} in the first CSI reporting configuration information, and is configured with power offset 1. For another example, the above first one of sub-configurations may configure an associated CSI-RS list {CSI-RS #1, CSI-RS #2} in the first CSI reporting configuration information, and is configured with power offset 1; the above fourth sub-configuration may configure an associated CSI-RS list {CSI-RS #3, CSI-RS #4} in the first CSI reporting configuration information, and is configured with power offset 2.

In some implementations, in a case where the CSI-RS resources associated with each sub-configuration in the M sub-configurations are identical, power offsets to which the M sub-configurations correspond are different.

For example, the above first one of sub-configurations may configure an associated CSI-RS list {CSI-RS #1, CSI-RS #2} in the first CSI reporting configuration information, and is configured with power offset 1; the above second one of sub-configurations may configure an associated CSI-RS list {CSI-RS #1, CSI-RS #2} in the first CSI reporting configuration information, and is configured with power offset 2.

In some implementations, in the first CSI reporting configuration information to which the M sub-configurations correspond, the first part of sub-configurations in the M sub-configurations are configured with power offsets, and the second part of sub-configurations in the M sub-configurations are not configured with power offsets.

In some implementations, the CSI-RS resources associated with each of the M sub-configurations are orthogonal or identical.

For example, for the case where the CSI-RS resources associated with each sub-configuration in the M sub-configurations are orthogonal,
for example, for energy-saving scenario 2, taking that K=4 and M=2 as examples, CSI reporting information of 2 sub-configurations may be configured in the first CSI reporting configuration information, and the first CSI-RS resource set in the first CSI-RS resource configuration information with which the CSI reporting information is associated includes K=4 CSI-RS resources. For example, the first one of sub-configurations may configure an associated CSI-RS list {CSI-RS #1, CSI-RS #2} in the first CSI reporting configuration information, and is configured with power offset 1; and the second one of sub-configurations may configure an associated CSI-RS list {CSI-RS #3, CSI-RS #4} in the first CSI reporting configuration information, and is not configured with power offset or is configured with power offset=0.

For example, for the case where the CSI-RS resources associated with each sub-configuration in the M sub-configurations are identical,
for example, for energy-saving scenario 2, taking that K=2 and M=2 as examples, CSI reporting information of 2 sub-configurations may be configured in the first CSI reporting configuration information, and the first CSI-RS resource set in the first CSI-RS resource configuration information with which the CSI reporting information is associated includes K=2 CSI-RS resources. For example, the first one of sub-configurations may configure an associated CSI-RS list {CSI-RS #1, CSI-RS #2} in the first CSI reporting configuration information, and is configured with power offset 1; and the second one of sub-configurations may configure an associated CSI-RS list {CSI-RS #1, CSI-RS #2} in the first CSI reporting configuration information, and is not configured with power offset or is configured with power offset=0.

In some implementations, the expression 'the CSI-RS resources with which each sub-configuration in the M sub-configurations is associated are identical' may be replaced with 'in the first CSI reporting configuration information of the information of the M sub-configurations, CSI-RS resource identifiers (IDs) of all CSI-RS resources in the associated resource list in the information of the M sub-configurations are identical', or, 'CSI-RS resource identifiers (IDs) of all CSI-RS resources in an associated resource list between the M sub-configurations expected/configured/scheduled by the terminal equipment are completely identical', or, "CSI-RS resource identifiers (IDs) of all CSI-RS resources in an associated resource list between the M sub-configurations configured/scheduled by the network device are completely identical'.

In some implementations, the expression 'the CSI-RS resources with which each sub-configuration in the M sub-configurations is associated are orthogonal' may also be replaced with 'in the first CSI reporting configuration information of the M sub-configurations, CSI-RS resource identifiers (IDs) of all CSI-RS resources in an associated resource list between the information of the M sub-configurations are completely different", or, "the terminal equipment is expected/configured/scheduled that CSI-RS resource identifiers (IDs) of all CSI-RS resources in an associated resource list between the information of the M sub-configurations are completely different", or, "the terminal equipment does not expect that CSI-RS resource identifiers (IDs) of all CSI-RS resources in an associated resource list between the information of the M sub-configurations overlap", or, "the network device configures/schedules that CSI-RS resource identifiers (IDs) of all CSI-RS resources in an associated resource list between the information of the M sub-configurations are completely different".

In some embodiments, the terminal equipment reports N CSI-RS resource index (CRI) values, where N is less than or equal to M.

For example, for N=M,
for example, a value of an *m-th* CRI in the M CRIs is i_m, and the *m-th* CRI is related to an *(*i*_m+1)-th* CSI-RS resource in the Zm CSI-RS resources related to *m-th* sub-configuration information in the information of the M sub-configurations; where, 1≤ n ≤ N, and 1≤ m ≤ M. For example, the CSI-RS resource may be an NZP CSI-RS used for channel measurement, and/or a CSI-IM used for interference measurement, and/or an NZP CSI-RS for interference measurement.

For example, taking that K=4 and M=2 as examples, CSI reporting information of 2 sub-configurations may be configured in the first CSI reporting configuration information, and the first CSI-RS resource set in the first CSI-RS resource configuration information with which the CSI reporting information is associated contains K=4 CSI-RS resources. For example, the first one of sub-configurations may configure an associated CSI-RS list {CSI-RS #1, CSI-RS #2} in the first CSI reporting configuration information, and is configured with power offset 1, and the second one of sub-configurations may configure an associated CSI-RS list {CSI-RS #3, CSI-RS #4} in the first CSI reporting configuration information, and is not configured with a power offset or is configured with power offset=0. The terminal equipment reports two CRIs, which respectively correspond to the first one of sub-configurations and the second one of sub-configurations.

For example, for N<M,
For example, a value of an *m-th* CRI in the N CRIs is i_m, and the *m-th* CRI is related to an *(*i*_m+1)-th* CSI-RS resource in the Zm CSI-RS resources related to *m-th* sub-configuration information in the information of the M sub-configurations; where, 1≤ n ≤ N, and 1< m ≤ M. For example, the CSI-RS resource may be an NZP CSI-RS used for channel measurement, and/or a CSI-IM used for interference measurement, and/or an NZP CSI-RS for interference measurement.

For example, taking that K=2 and M=2 as examples, CSI reporting information of 2 sub-configurations may be configured in the first CSI reporting configuration information, and the first CSI-RS resource set in the first CSI-RS resource configuration information with which the CSI reporting information is associated contains K=2 CSI-RS resources. For example, the first one of sub-configurations may configure an associated CSI-RS list {CSI-RS #1, CSI-RS #2} in the first CSI reporting configuration information, and is configured with power offset 1, and the second one of sub-configurations may configure an associated CSI-RS list {CSI-RS #1, CSI-RS #2} in the first CSI reporting configuration information, and is configured with power offset 2. For example, the terminal equipment reports one CRI, which corresponds to both the first one of sub-configurations and the second one of sub-configurations, wherein the terminal equipment may report the CRI to the first one of sub-configurations corresponds or the CRI to the second one of sub-configurations corresponds. Which CRI is to be reported may be determined in a pre-defined or network device indicated manner, which is not limited in this disclosure.

For example, taking that K=4 and M=2 as examples, CSI reporting information of 2 sub-configurations may be configured in the first CSI reporting configuration information, and the first CSI-RS resource set in the first CSI-RS resource configuration information with which the CSI reporting information is associated contains K=4 CSI-RS resources. For example, the first one of sub-configurations may configure an associated CSI-RS list {CSI-RS #1, CSI-RS #2} in the first CSI reporting configuration information, and is configured with power offset 1, and the second one of sub-configurations may configure an associated CSI-RS list {CSI-RS #3, CSI-RS #4} in the first CSI reporting configuration information, and is not configured with a power offset or is configured with power offset=0. The terminal equipment reports two CRIs, which respectively correspond to the first one of sub-configurations and the second one of sub-configurations. For example, the terminal equipment reports one CRI, wherein the terminal equipment may report a CRI to the first one of sub-configurations corresponds or a CRI to which the second one of sub-configurations corresponds. Which CRI is to be reported may be determined in a pre-defined or network device indicated manner, which is not limited in this disclosure.

In some embodiments, each first CSI-RS resource set includes Z CSI-RS resource groups, wherein each of the Z CSI-RS resource groups includes K CSI-RS resources, K CSI-RS resources in a CSI-RS resource group in the Z CSI-RS resource groups being used to determine channel measurement of a sub-configuration in the M sub-configurations.

In some embodiments, Z=M, and the Z CSI-RS resource groups correspond one-to-one with the M sub-configurations.

For example, Z is an integer greater than or equal to 1, Z=M, and K=16. For example, the first CSI-RS resource set contains Z CSI-RS resource groups, each CSI-RS resource group containing 16 CSI-RS resources.

For example, for energy-saving scenario 2, taking that M=4 (there are four sub-configurations) as an example, the four CSI-RS resource groups correspond respectively to four sub-configurations, 16 CSI-RS resources in each CSI-RS resource group being used to measure channel information of a sub-configuration. For example, reference may be made to the related art for a specific measurement method, which is not limited in this disclosure. The terminal equipment performs reporting based on a result after measurement (which shall be described in detail later in this description).

In some embodiments, each first CSI-RS resource set includes Z CSI-RS resource groups, where Z=M, and the Z CSI-RS resource groups correspond to at least Y group pairing information, wherein one of the Y group pairing information indicates Z CSI-RS resources to which the Z CSI-RS resource groups correspond, and wherein one CSI-RS resource in the Z CSI-RS resources is used to determine channel measurement of one sub-configuration in the M sub-configurations.

For example, Y and Z are integers greater than or equal to 1, Z=M, and K=2. For example, the first CSI-RS resource set contains Z CSI-RS resource groups, each of which containing 2 CSI-RS resources.

For example, for energy-saving scenario 2, taking that Z=M=3 (there are three sub-configurations) as an example, the three CSI-RS resource groups include six CSI-RS resources. For example, resources of group 1 are (CSI-RS #0, CSI-RS #1) and correspond to the first one of sub-configurations, resources of group 2 are (CSI-RS #2, CSI-RS #3) and correspond to the second one of sub-configurations, and resources of group 3 are (CSI-RS #4, CSI-RS #5) and correspond to the third one of sub-configurations. Additional Y=2 group pairing information are added. For example, pairing information 1 may be {CSI-RS #0 (corresponding to the first one of sub-configurations), CSI-RS #2 (corresponding to the second one of sub-configurations), CSI-RS #4 (corresponding to the third one of sub-configurations)}, and pairing information 2 may be {CSI-RS #1 (corresponding to the first one of sub-configurations), CSI-RS #3 (corresponding to the second one of sub-configurations), CSI-RS #5 (corresponding to the third one of sub-configurations)}, one CSI-RS resource in each group of pairing information being used to measure channel information of a corresponding sub-configuration. For example, reference may be made to the related art for a specific measurement method, which is not limited in this disclosure. The terminal equipment performs reporting based on a result after measurement (which shall be described in detail later in this description).

In some embodiments, each first CSI-RS resource set includes Z CSI-RS resource groups, each of the Z CSI-RS resource groups containing K CSI-RS resources, wherein each CSI-RS resource in a first one of CSI-RS resource groups of the Z CSI-RS resource groups is used to determine channel measurement of the M sub-configurations, and/or, K CSI-RS resources in a CSI-RS resource group in the Z CSI-RS resource groups other than the first one of CSI-RS resource groups are used to determine channel measurement of a sub-configuration in the M sub-configurations.

For example, Z is an integer greater than or equal to 1, Z=M+1, M=6, and K=2. For example, the first CSI-RS resource set contains Z CSI-RS resource groups, each containing 16 CSI-RS resources.

For example, in a case where M=3 and Z=4, for a first one of CSI-RS resource groups in four CSI-RS resource groups, it corresponds to energy-saving scenario 1, and each of the 16 CSI-RS resources in the first one of CSI-RS resource groups corresponds to channel measurement reporting of three sub-configurations. For example, in the case where M=3 and Z=4, a second to fourth one of CSI-RS resource groups in the four CSI-RS resource groups correspond to energy-saving scenario 2, each of the 16 CSI-RS resources in the second one of CSI-RS resource groups corresponds to channel measurement report of the first one of sub-configurations, each of the 16 CSI-RS resources in the third one of CSI-RS resource groups corresponds to channel measurement report of the second one of sub-configurations, and each of the 16 CSI-RS resources in the fourth CSI-RS resource group corresponds to channel measurement report of the third one of sub-configurations. For example, reference may be made to the related art for a specific measurement method, which is not limited in this disclosure. The terminal equipment performs reporting based on a result after measurement (which shall be described in detail later in this description).

In some embodiments, the first CSI-RS resource set includes at least K CSI-RS resources, wherein each of K1 CSI-RS resources in the K CSI-RS resources is used to determine channel measurement of the M sub-configurations, and/or, one of M CSI-RS resources in the K CSI-RS resources other than the K1 CSI-RS resources is used to determine channel measurement of one of the M sub-configurations; where, K1+M=K.

For example, in a case where M=3 and K1=3, for energy-saving scenario 1, each resource in the K1 CSI-RS resources corresponds to 3 sub-configurations, and for energy-saving scenario 2, an *i-th* resource in the M CSI-RS resources corresponds to an *i-th* sub-configuration. For example, reference may be made to the related art for a specific measurement method, which is not limited in this disclosure. The terminal equipment performs reporting based on a result after measurement (which shall be described in detail later in this description).

How to determine the CSI-RS resources used for channel measurement of the M sub-configurations is exemplified above. How to indicate the terminal equipment to perform CSI-RS reporting after determining the CSI-RS resources used for channel measurement of the M sub-configurations shall be described below, that is, "the first CSI-RS resource configuration information is related to the first CSI reporting information corresponding to the M sub-configurations in the first CSI reporting configuration information" shall be described in detail.

In some embodiments, the first CSI reporting configuration information at least indicates reporting one CSI-RS resource index value reporting quantity information.

In some embodiments, the one CSI-RS resource index value reporting quantity information is indicated by log (K) bits.

For example, for energy-saving scenario 1, in a case where K=16, the first CSI-RS resource set contains 16 CSI-RS resources. The terminal equipment selects an optimal CSI-RS resource based on large-scale channel information of the 16 CSI-RS resources, and reports an index (CRI) to which the CSI-RS resource corresponds. For example, if a third one of CSI-RS resources is optimal, it may be reported by 0011 to which log (16)=4 bits correspond.

In some embodiments, the first CSI reporting configuration information at least indicates: not reporting the CSI-RS resource index value reporting quantity information, and/or, reporting X CSI-RS resource index value reporting quantity information.

For example, the not reporting the CSI-RS resource index value reporting quantity information refers to, for example, that in energy-saving scenario 2, M=4, four CSI-RS resources correspond respectively to four sub-configurations, each of the CSI-RS resources is used to measure channel information of a sub-configuration, the terminal equipment measures channel state information of the four CSI-RS resources, and reports all CSI information of the four sub-configurations, in which case there is no need to perform reporting of the CSI-RS resource index value reporting quantity information, that is, no CRI is reported.

In some embodiments, the X CSI-RS resource index value reporting quantity information are indicated by K bits; where, X<=K.

For example, in energy-saving scenario 2, K=M=4, four CSI-RS resources correspond respectively to four sub-configurations, and based on large-scale channel information of the four CSI-RS resources, the terminal selects and reports X optimal CSI-RSs corresponding to X sub-configuration information, such as reporting first and third one of CSI-RS resources, and reports first and third one of sub-configuration information via K bits (4 bits), such as 1010.

In some embodiments, the first CSI reporting configuration information at least indicates: reporting Z CSI-RS resource index value reporting quantity information, and/or, reporting P CSI-RS resource group index value reporting quantity information, and/or, reporting P resource index value reporting quantity information of CSI-RS resources in P CSI-RS resource groups.

In some embodiments, the Z CSI-RS resource index value reporting quantity information are indicated by Zlog (K) bits.

For example, in energy-saving scenario 2, Z=M=4, each CSI-RS resource group contains 16 CSI-RS resources, and 4 CSI-RS resource groups correspond respectively to 4 sub-configurations. For example, the terminal measures channel state information of 4 resource groups, selects and reports an optimal CSI-RS resource in each group, and may report via Z*log (K)=4*4 bits. For example, a first one of resources in each group is selected and reported, and all CSI-RS resource index value reporting quantity information of 4 sub-configurations may be reported via 000100010001 used for channel measurement reporting of 4 sub-configurations.

In some embodiments, the P CSI-RS resource group index value reporting quantity information are indicated by Z bits; where, P <= Z.

For example, in energy-saving scenario 2, Z=M=4, four CSI-RS resource groups correspond respectively to four sub-configurations, for example, the terminal measures channel state information of four resource groups, such as measuring a first one of CSI-RS resources in each CSI-RS resource group, and selecting to report the CSI-RS resource groups. For example, a selected optimal resource corresponds to a second one of CSI-RS resource groups and a fourth one of CSI-RS resource groups, which may be indicated by Z bits, such as 4 bits, and the CSI-RS resource index value reporting quantity information is indicated by Z bits (such as 4 bits) via 0101.

In some embodiments, the P CSI-RS resource index value reporting quantity information are indicated by Plog (K)+Z bits.

For example, in energy-saving scenario 2, Z=M=4, each CSI-RS resource group respectively contains 16 CSI-RS resources, and 4 CSI-RS resource groups respectively correspond to 4 sub-configurations. For example, based on large-scale channel information of the 4 CSI-RS resource groups, the terminal equipment selects and reports P optimal resource groups corresponding to X sub-configuration information, such as P=2, and reports a first and third CSI-RS resource groups. The first and third one of sub-configuration information may be reported by Z=4-bit 1010, an optimal CSI-RS resource in each group is reported via 2*log (K), and all CSI information of the two sub-configurations are reported.

In some embodiments, the first CSI reporting configuration information at least indicates: reporting one CSI-RS resource pairing index value reporting quantity information, and/or reporting S CSI-RS resource index value reporting quantity information in the one CSI-RS resource pairing index value reporting quantity information.

In some embodiments, the one CSI-RS resource pairing index value reporting quantity information is indicated by log (Y) bits.

For example, Y=2, the terminal equipment measures channel state information of all CSI-RS resources in two group pairs, selects and reports an optimal group pair, and the reporting may be performed via log (Y=2)=1 bit. For example, a group pair is selected and reported, resources for channel measurement reporting for 3 sub-configurations may be determined as {CSI-RS #0, CSI-RS #2, CSI-RS #4} via 0, and all CSI information of the 3 sub-configurations is reported.

In some embodiments, the S CSI-RS resource index value reporting quantity information are indicated by M bits; where, S<=M.

For example, in energy-saving scenario 2, Y=2, the terminal equipment measures channel state information of all CSI-RS resources in two group pairs, and selects an optimal group pair to report, and the reporting may be performed via log (Y=2)=1 bit. For example, a first group pair is selected to report, resources for reporting channel measurement of 3 sub-configurations may be determined by bit "0" as {CSI-RS #0, CSI-RS #2, CSI-RS #4}, then S sub-configuration information to which S optimal resources in the reported group pairs correspond are selected. M bits, such as 011, denotes selecting and reporting CSI-RS#2, CSI-RS#4, indicating reporting all CSI information of the latter two sub-configurations.

In some embodiments, the first CSI reporting configuration information at least indicates: reporting one CSI-RS resource pairing index value reporting quantity information, and/or, reporting 1+J CSI-RS index values.

In some embodiments, the one CSI-RS resource index value reporting quantity information is indicated by log (K1) bits.

For example, the terminal equipment measures channel state information of all the K1 CSI-RS resources and selects an optimal CSI-RS resource in the K1 CSI-RS resources, such as K1=4, and the reporting may be performed via log (4)=2 bits. For example, a first one of CSI-RS resources is selected and reported, the reporting may be performed via bit "00", and latter M CSI-RS resources need to be all reported.

In some embodiments, the 1+J CSI-RS resource index value reporting quantity information are indicated by log (K1)+M bits; where, J<=M.

For example, the terminal equipment measures channel state information of all the K1 CSI-RS resources and the M CSI-RS resources, and selects J optimal CSI-RS resources in the M CSI-RS resources, for example, J=2. After the optimal resources in the K1 CSI-RS resources are reported by using the above log (K1) method, the J optimal CSI-RS resources need to be indicated by M bits, for example, J=2. Bits "011" denotes selecting and reporting CSI information of the second one of sub-configurations and the third one of sub-configurations.

How to determine the CSI-RS resources for channel measurement of the M sub-configurations and how to indicate the terminal equipment to perform CSI-RS reporting after determining the CSI-RS resources for channel measurement of the M sub-configurations are described above respectively.

Following description shall be given below with reference to specific behaviors of the terminal equipment side.

For example, for the cases where "each first CSI-RS resource set includes K CSI-RS resources, wherein each of the K CSI-RS resources is used to determine channel measurement of the M sub-configurations" and "the first CSI reporting configuration information at least indicates reporting one CSI-RS resource index value reporting quantity information, the one CSI-RS resource index value reporting quantity information is indicated by log (K) bits", the behaviors of the terminal equipment side includes but is not limited to the following steps:
1) step 1: the terminal equipment receives the first CSI-RS resource configuration information for channel measurement, wherein the first CSI-RS resource configuration information includes a first CSI-RS resource set, the first CSI-RS resource set including K=16 CSI-RS resources;
2) step 2: including first CSI reporting information of M=3 sub-configurations in the first CSI reporting configuration information; where, M=3, denoting information of three sub-configurations, 32 ports, 16 ports, and 12 ports;
   a) step 2-1: performing port configuration on the 3 sub-configurations in a manner as follows:
      i. for example, the three indication information are 'nrofport1'=32, 'nrofport2'=16 and 'nrofport2'=12, respectively;
      ii. and or, the three indication information are 'N1, N2_L1'=(4,4) 'N1, N2_L2'=(4,2) 'N1 and N2_L3'=(3,4)', respectively;
      iii. and/or, performing port indication on remaining sub-configurations via the number of ports of sub-configuration #0 or a bitmap with the number of ports divided by 2,
         1. for example, port indication may be performed on port 32 via 'N1, N2'=(4,4)
         2. port indication may be performed on port 16 via bitmap 32, for example, 11001100110011001100110011001100 denotes indication information of port 16
         3. port 12 may also be indicated via bitmap 32, for example, 11001000110010001100100011001000 denotes indication information of port 12
         4. as former 16 bits and latter 16 bits represent different polarization directions and selected antenna elements should be consistent, port indication may further be performed via bitmap 16,
            a) port 16 may be indicated via bitmap 16, for example, 110011001100 denotes indication information of port 16;
            b) port 12 may also be indicated via bitmap 16, for example, 1100100011001000 denotes indication information of port 12;
3) step 3: 16 CSI-RS resources in the first CSI-RS resource set are all related to M=3 sub-configurations in the first CSI reporting configuration information;
4) step 4: based on large-scale channel information of 16 CSI-RS resources, the terminal equipment selects an optimal resource and reports a CRI; for example, a third one of CSI-RS resources is selected, and log (16)=4bit 0011 may be used to report the third one of CSI-RS resources;
5) step 5: the terminal equipment measures channel state information under three sub-configurations based on the third one of CSI-RS resources and sub-configuration information of M=3, and reports all CSI information of the three sub-configurations.

For example, for the cases where "each first CSI-RS resource set includes K CSI-RS resources; where, K=M, and one of the K CSI-RS resources is used to determine channel measurement of one of the M sub-configurations" and "the first CSI reporting configuration information at least indicates: not reporting the CSI-RS resource index value reporting quantity information, and/or, reporting X CSI-RS resource index value reporting quantity information", behaviors of the terminal equipment side include but not limited to the following steps:
1)step 1: the terminal equipment receives the first CSI-RS resource configuration information for channel measurement, wherein the first CSI-RS resource configuration information includes one first CSI-RS resource set, the one first CSI-RS resource set including K=4 CSI-RS resources;
2)step 2: the first CSI reporting configuration information includes first CSI reporting information of M=4 sub-configurations; where, M=4, representing different energy-saving sub-configuration information under identical ports, such as 32 physical antenna configuration, 16 physical antenna configuration, 12 physical antenna configuration and 8 physical antenna configuration under port 4 (the physical antenna configurations may be transparent to the terminal side);
3) step 3: four CSI-RS resources in the first CSI-RS resource set are used one-to-one for M=4 sub-configurations in the first CSI reporting configuration information; for example, a first one of CSI-RS resources is used to measure 64 physical antenna configurations under 4 ports;
   a) step 3-1: wherein the port configuration of the 4 sub-configurations may be performed in a manner as follows:
      i. numbers of ports of the 4 sub-configurations indicated by 4 indication information should be equal, for example, 'nrofport1'='nrofport2'='nrofport1'='nrofport2'=32;
      ii. port configurations in reporting configurations of the 4 sub-configurations indicated by the 4 indication information should be identical, for example, 'N1,N2_L1'='N1,N2_L2'= 'N1,N2_L3' ='N1,N2_L4'=(4,4);
      iii. optionally, port configuration of all resource may be performed by one indication information, such as performing configuration of 'nrofports' in a resource setting;
4) step 4-1: the terminal equipment measures channel state information of the four CSI-RS resources and reports all CSI information of the four sub-configurations; in this case, there is no need to perform CRI reporting;
5) step 4-2: based on large-scale channel information of the four resources, the terminal selects and reports X optimal resources corresponding to X sub-configuration information, such as reporting first and third one of resources, the first and third one of CSI-RS resources may be reported by K=4bit 1010, and all CSI information of the two sub-configurations are reported.

For example, for the cases where "each first CSI-RS resource set includes Z CSI-RS resource groups, wherein each of the Z CSI-RS resource groups includes K CSI-RS resources, K CSI-RS resources in a CSI-RS resource group in the Z CSI-RS resource groups being used to determine channel measurement of a sub-configuration in the M sub-configurations" and "the first CSI reporting configuration information at least indicates: reporting Z CSI-RS resource index value reporting quantity information, and/or, reporting P CSI-RS resource group index value reporting quantity information, and/or, reporting P resource index value reporting quantity information of CSI-RS resources in P CSI-RS resource groups", the behaviors of the terminal equipment side include but are not limited to the following steps:
1) step 1: the terminal equipment receives first CSI-RS resource configuration information for channel measurement, wherein the first CSI-RS resource configuration information includes one first CSI-RS resource set, the one first CSI-RS resource set including Z=4 CSI-RS resource groups, and one CSI-RS resource group including K=16 CSI-RS resources, hence, total 64 CSI-RS resource information are included;
2)step 2: the first CSI reporting configuration information includes first CSI reporting information of M=4 sub-configurations; where, M=4, representing different energy-saving sub-configuration information under identical ports, such as 32 physical antenna configuration, 16 physical antenna configuration, 12 physical antenna configuration and 8 physical antenna configuration under port 4 (the physical antenna configurations may be transparent to the terminal side);
3) step 3: each of the four resource groups in the first CSI-RS resource set is used one-to-one for the M=4 sub-configurations in the first CSI reporting configuration information; for example, a first one of CSI-RS resource groups is used to measure the 64 physical antenna configurations under 4 ports;
   a) step 3-1: wherein port configuration of the 4 sub-configurations may be performed in a manner as follows:
      i. numbers of ports configured for all resource of the four resource groups corresponding to the 4 sub-configurations indicated by 4 indication information should be equal, for example, 'nrofport1'='nrofport2'='nrofport3 '='nrofport4'=32;
      ii. port configurations in reporting configurations of the 4 sub-configurations indicated by the 4 indication information should be identical, for example, ' N1,N2_L1'='N1,N2_L2'= 'N1,N2_L3' ='N1,N2_L4'=(4,4);
      iii. optionally, port configuration of all resources may be performed via one indication information, such as performing configuration of 'nrofports' in a resource setting, or configuring only one N1, N2 information for all sub-configurations in the reporting configuration;
4) step 4-1: the terminal equipment measures channel state information of four resource groups, and selects and reports an optimal resource in each group, and the reporting may be performed via Z*log (K)=4*4 bits. For example, a first one of resources in each group is selected and reported, 0001000100010001 may be used for channel measurement reporting of the 4 sub-configurations, and all CSI information of the 4 sub-configurations are reported.
5) step 4-2: reporting overhead may further be saved in a pre-defined manner, for example, resource index values of each selected group must be identical. For example, a first one of resources in each group is selected and reported, log(K)bit, such as 0001, may be used for channel measurement reporting of the 4 sub-configurations, and all CSI information of the 4 sub-configurations are reported.
6) step 4-2: based on large-scale channel information of resources in the four resource groups, the terminal selects and reports P optimal resource groups corresponding to P sub-configuration information, such as reporting first and third one of groups of resources, the first and third one of sub-configuration information may be reported by Z=4bit 1010, the optimal resource in each group is reported via 2*log(K), and all CSI information of the two sub-configurations are reported.
7) step 4-3: based on large-scale channel information in the four resource groups, the terminal equipment selects and reports P optimal resource groups corresponding to P sub-configuration information, such as reporting first and third one of groups of resources, the first and third one of sub-configuration information may be reported by Z=4-bit 1010, and then reports an optimal CSI-RS resource in each group in a pre-defined manner, for example, resource index values of each selected group must be identical, via log(K), and all CSI information of the 2 sub-configurations are reported.

For example, for the cases where "each first CSI-RS resource set includes Z CSI-RS resource groups, where Z=M, and the Z CSI-RS resource groups correspond to at least Y group pairing information, wherein one of the Y group pairing information indicates Z CSI-RS resources to which the Z CSI-RS resource groups correspond, and wherein one CSI-RS resource in the Z CSI-RS resources is used to determine channel measurement of one sub-configuration in the M sub-configurations" and "the first CSI reporting configuration information at least indicates: reporting one CSI-RS resource pairing index value reporting quantity information, and/or reporting S CSI-RS resource index value reporting quantity information in the one CSI-RS resource pairing index value reporting quantity information", the behaviors of the terminal equipment side include but are not limited to the following steps:
1) step 1-1: the terminal equipment receives the first CSI-RS resource configuration information for channel measurement, wherein the first CSI-RS resource configuration information includes 1 first CSI-RS resource set, the 1 first CSI-RS resource set including Z=3 CSI-RS resource groups, and 1 CSI-RS resource group including K=2 CSI-RS resources, thus including total 6 CSI-RS resource information, group 1 resources being (CSI-RS #0, CSI-RS #1), group 2 resources being (CSI-RS #2, CSI-RS #3), and group 3 resources being (CSI-RS #4, CSI-RS #5);
2) step 1-2: additional Y=2 group pairing information are added, for example, group pairing information 1 may be {CSI-RS #0, CSI-RS #2, CSI-RS #4}, and group pairing information 2 may be {CSI-RS #1, CSI-RS #3, CSI-RS #5};
   a) optionally, the number of the group pairing information may be configured via higher-layer information or in a pre-defined manner;
3) step 2: the first CSI reporting configuration information includes first CSI reporting information of M=3 sub-configurations; where, M=3, representing different energy-saving sub-configuration information under identical ports, such as 32 physical antenna configuration, 16 physical antenna configuration and 12 physical antenna configuration under port 4 (the physical antenna configurations may be transparent to the terminal side);
4) step 3: each of the three resource groups in the first CSI-RS resource set is used one-to-one for M=4 sub-configuration information in the first CSI reporting configuration information, for example, a first one of CSI-RS resource groups is used to measure 32 physical antenna configurations under 4 ports;
   a) step 3-1: wherein port configuration of 3 sub-configurations may be performed in a manner as follows:
      i. numbers of ports of all resource configuration information of the four groups of resources corresponding to the 3 sub-configurations indicated by the 3 indication information should be equal, for example, 'nrofport1 '='nrofport2'='nrofport3 '=32;
      ii. port configurations in the reporting configurations of the three sub-configurations indicated by the three indication information should be identical, for example, ' N1,N2_L1'='N1,N2_L2'= 'N1,N2_L3' =(4,4);
      iii. optionally, port configuration of all resources may be performed via one indication information, such as performing configuration of 'nrofports' in a resource setting, or configuring only one N1, N2 information for all sub-configurations in a report configuring;
5) step 4-1: the terminal equipment measures channel state information of all resources within two group pairs, and selects are reports optimal resource pairing information, and the reporting may be performed via log (Y=2)=1-bit. For example, first one of group pairing information is selected and reported, resources for channel measurement reporting for the 3 sub-configurations may be determined by bit "0" as {CSI-RS #0, CSI-RS #2, CSI-RS #4}, and all CSI information of the 3 sub-configurations are reported.
6) step 4-2: the terminal equipment measures channel state information of all resources within two group pairs, and selects and reports optimal resource pairing information, and the reporting may be performed via log (Y=2)=1bit. For example, first one of group pairing information is selected and reported, resources for channel measurement reporting for the three sub-configurations may be determined by bit "0" as {CSI-RS #0, CSI-RS #2, CSI-RS #4}. Then, S optimal resource groups corresponding to S sub-configuration information in the reported pair is selected, for example, S=2. Furthermore, log (M) bit, such as 011 may be used to select and report CSI-RS #2 and CSI-RS #4, indicating reporting all CSI information of latter two sub-configurations.

For example, for the case where "each first CSI-RS resource set includes Z CSI-RS resource groups, each of the Z CSI-RS resource groups containing K CSI-RS resources, wherein each CSI-RS resource in a first one of CSI-RS resource groups of the Z CSI-RS resource groups is used to determine channel measurement of the M sub-configurations, and/or, K CSI-RS resources in a CSI-RS resource group in the Z CSI-RS resource groups other than the first one of CSI-RS resource groups are used to determine channel measurement of a sub-configuration in the M sub-configurations", the behaviors of the terminal equipment side include but are not limited to the following steps:
1) step 1: the terminal equipment receives the first CSI-RS resource configuration information for channel measurement, wherein the first CSI-RS resource configuration information includes one first CSI-RS resource set, the one first CSI-RS resource set including Z=4 CSI-RS resource groups, one CSI-RS resource group including K=16 CSI-RS resources, hence, total 64 sub-resource information are included;
2) step 2-1: the first CSI reporting configuration information includes first CSI reporting information of M=3 sub-configurations, wherein CSI-RS resources in K CSI-RS resources in a first group correspond to channel measurement reporting of three sub-configurations. For example, for energy-saving scenario 1, numbers of ports of the three sub-configurations are different, such as corresponding respectively to 32 ports, 16 ports and 12 ports. The K resources in the first one of groups may perform port configuration of the 3 sub-configurations in a manner as follows:
   i. for example, 'nrofport1'=32, 'nrofport2'=16, 'nrofport2'=12,
   ii. and/or, performing port indication on remaining sub-configurations via the number of ports of sub-configuration #0 or a bitmap with the number of ports divided by 2,
      1. for example, port indication may be performed on port 32 via 'N1, N2'=(4,4)
      2. port indication may be performed on port 16 via bitmap 32, for example, 11001100110011001100110011001100 denotes indication information of port 16;
      3. port 12 may also be indicated via bitmap 32, for example, 11001000110010001100100011001000 denotes indication information of port 12;
      4. as former 16 bits and latter 16 bits represent different polarization directions and selected antenna elements should be consistent, port indication may further be performed via bitmap 16,
         a) port 16 may be indicated via bitmap 16, for example, 1100110011001100 denotes indication information of port 16;
         b) port 12 may also be indicated via bitmap 16, for example, 1100100011001000 denotes indication information of port 12;
3) step 2-2: the first CSI reporting configuration information includes first CSI reporting information of M=3 sub-configurations, wherein second to fourth one of groups of CSI-RS resources correspond one-to-one to the first to third one of sub-configurations, respectively. Numbers of ports of the first to third one of sub-configurations are identical, and represent different energy-saving sub-configuration information under identical ports, such as 32 physical antenna configuration, 16 physical antenna configuration, and 12 physical antenna configuration under 4 ports.
   i. port configuration of four sub-configurations may be performed in a manner as follows: 1. numbers of ports of all resource configuration information of four groups of resources corresponding to the three sub-configurations should be equal, for example, 'nrofport1 '='nrofport2'='nrofport3 '=32;
      2. port configurations in reporting configurations of the 3 sub-configurations should be identical, for example, ' N1, N2_L1 '=' N1, N2_L2 '=' N1, N2_L3 '=(4,4);
      3. optionally, port configuration of all resources may be performed via one indication information, such as performing configuration of 'nrofports' in a resource setting, or configuring only one N1, N2 information for all sub-configurations in a report configuring;
      4. optionally, port configuration of each group may be performed via 3 groups of configuration information;
4) step 4-1: the terminal equipment measures channel state information of 4 groups of resources, and an optimal resource in each group needs to be selected and reported, and the reporting may be performed via Z * log (K)=4 * 4 bits. For example, a first one of resources in each group is reported, and 0001000100010001 may be used for channel measurement reporting;
   a) the first one of resources in the first one of groups is selected for reporting all CSI information of three sub-configurations, i.e. CSI information of port 32, port 16, and port 12;
   b) a first one of resources in a second one of groups is selected for reporting CSI information of a first one of sub-configurations, i.e. CSI information of 32 physical antennas under 4 ports;
   c) a first one of resources in a third one of groups is selected for reporting CSI information of a second one of sub-configurations, i.e. CSI information of 16 physical antennas under 4 ports;
   d) a first one of resources in a fourth one of groups is selected for reporting CSI information of a third one of sub-configurations, i.e. CSI information of 12 physical antennas under 4 ports;
5) step 4-2: reporting overhead may further be saved in a pre-defined manner, for example, resource index values of each selected group must be identical. For example, a first one of resources in each group is selected and reported, and log(K)bit, such as 0001, may be used for channel measurement reporting of the 4 sub-configurations.

For example, for the cases where "the first CSI-RS resource set includes at least K CSI-RS resources, wherein each of K1 CSI-RS resources in the K CSI-RS resources is used to determine channel measurement of the M sub-configurations, and/or, one of M CSI-RS resources in the K CSI-RS resources other than the K1 CSI-RS resources is used to determine channel measurement of one of the M sub-configurations; where, K1+M=K" and "the first CSI reporting configuration information at least indicates: reporting one CSI-RS resource pairing index value reporting quantity information, and/or, reporting 1+J CSI-RS index values", the behaviors of the terminal equipment side include but are not limited to the following steps:
1) step 1: the terminal equipment receives the first CSI-RS resource configuration information for channel measurement, wherein the first CSI-RS resource configuration information includes a first CSI-RS resource set, the first CSI-RS resource set including K=6 CSI-RS resources, which may be divided into the following two groups of resources:
   a) resources #0~K1-1: corresponding to energy-saving scenario 1 and corresponding to K1=3 CSI-RS resources, and each resource corresponding to 3 sub-configurations;
   b) resources #K1~K-1: corresponding to energy-saving scenario 2 and corresponding to M=3 CSI-RS resources, an *i-th* resource within M CSI-RS resources corresponds to *i-th* sub-configuration information;
2) step 2-1: the first CSI reporting configuration information includes first CSI reporting information of M=3 sub-configurations, wherein each resource in former K1 resources corresponds to channel measurement reporting of the three sub-configurations, i.e. energy-saving scenario 1. Hence, numbers of ports of the three sub-configurations are different, such as 32 ports, 16 ports, and 12 ports. Port configuration of the three sub-configurations may be performed in a manner as follows: i. For example, 'nrofport1'=32, 'nrofport2'=16, 'nrofport2'=12;
   ii. and/or, performing port indication on remaining sub-configurations via the number of ports of sub-configuration #0 or a bitmap with the number of ports divided by 2,
   1. for example, port indication may be performed on port 32 via 'N1, N2'=(4,4)
   2. port indication may be performed on port 16 via bitmap 32, for example, 11001100110011001100110011001100 denotes indication information of port 16;
   3. port 12 may also be indicated via bitmap 32, for example, 11001000110010001100100011001000 denotes indication information of port 12;
   4. as former 16 bits and latter 16 bits represent different polarization directions and selected antenna elements should be consistent, port indication may further be performed via bitmap 16,
      a) port 16 may be indicated via bitmap 16, for example, 1100110011001100 denotes port indication information of port 16;
      b) port 12 may also be indicated via bitmap 16, for example, 1100100011001000 denotes port indication information of port 12;
3) step 2-2: the first CSI reporting configuration information includes first CSI reporting information of M=3 sub-configurations, wherein resources in latter M resources in a first CSI-RS resource configuration correspond are one-to-one used for the three sub-configurations in the first CSI reporting configuration information, hence, numbers of ports in latter three sub-configurations are identical, and represent different energy-saving sub-configuration information under identical ports, such as 32 physical antenna configuration, 16 physical antenna configuration, and 12 physical antenna configuration under 4 ports.
   i. wherein port configuration of the three sub-configurations may be performed in a manner as follows:
      1. for example, 'nrofport1'='nrofport2'='nrofport3'=32;
      2. port configurations in a reporting configuration of the 3 sub-configurations should be identical, for example, 'N1, N2_L1 '='N1, N2_L2 '='N1, N2_L3'=(4,4);
      3. optionally, port configuration of all resources may be performed via one port configuration information, such as performing configuration of 'nrofports' in a resource setting, or configuring only one N1, N2 information for all sub-configurations in a report configuring;
      4. optionally, port configuration of each group may be performed via 3 groups of configuration information;
4) step 4-1: the terminal equipment measures channel state information of all resources, and an optimal resource in former K1 resources is selected and reported, the reporting may be performed via log (3)=2 bits, and subsequent M resources need to be reported; and predefinition is performed, for example, 2 bits are defined as "00", and a meaning thereof is:
   a) a first one of resources is selected from former K1 resources for reporting all CSI information of three sub-configurations, i.e. CSI information of port 32, port 16 and port 12;
   b) all corresponding sub-configurations in latter M resources, such as CSI information of 32 physical antennas, 16 physical antennas and 12 physical antennas under 4 ports;
4) step 4-2: the terminal equipment measures channel state information of all resources, selects and reports an optimal resource in former K1 resources first, reporting may be performed via log (3)=2 bits, and then selects and reports resources from the M resources to which a part of sub-configurations correspond, such as selecting two (J=2) resources, and 3 bits, such as bit "011", represent selecting and reporting CSI information of the second one of sub-configurations and the third one of sub-configurations.

How the terminal equipment performs channel measurement is exemplified above. For example, in actual CSI configuration, additional CSI resource settings may be configured primarily for interference measurement (IM), and CSI-RS resources in the set are correspondingly configured as CSI-IMs and/or CSI-RSs.

Following is detailed description.

In some embodiments, the terminal equipment further receives second CSI resource configuration information, the second CSI resource configuration information configuring at least one second CSI-RS resource set, each second CSI-RS resource set including K CSI-IM and/or NZP CSI-RS resources, wherein each CSI-IM and/or NZP CSI-RS resource in the K CSI-IM and/or NZP CSI-RS resources is/are used to determine interference measurement of the M sub-configurations.

In some embodiments, the terminal equipment further receives second CSI resource configuration information, the second CSI resource configuration information configuring at least one second CSI-RS resource set, each second CSI-RS resource set including M*K CSI-IM and/or NZP CSI-RS resources, wherein each CSI-IM and/or NZP CSI-RS resource in the K CSI-IM and/or NZP CSI-RS resources is/are used to determine interference measurements of a sub-configuration.

In some embodiments, the terminal equipment further receives second CSI resource configuration information, the second CSI resource configuration information configuring at least one second CSI-RS resource set, each second CSI-RS resource set including K CSI-IM and/or NZP CSI-RS resources, wherein each CSI-IM and/or NZP CSI-RS resource in the K CSI-IM and/or NZP CSI-RS resources is/are used to determine interference measurement of a sub-configuration.

In some embodiments, the terminal equipment further receives second CSI resource configuration information, the second CSI resource configuration information configuring at least one second CSI-RS resource set, each second CSI-RS resource set including a CSI-IM and/or NZP CSI-RS resource, wherein the CSI-IM and/or NZP CSI-RS resource is/are used to determine interference measurement of the M sub-configurations.

In some embodiments, the terminal equipment further receives second CSI resource configuration information, the second CSI resource configuration information configuring at least one second CSI-RS resource set, each second CSI-RS resource set including Z*K CSI-IM and/or NZP CSI-RS resources, wherein each CSI-IM and/or NZP CSI-RS resource in the K CSI-IM and/or NZP CSI-RS resources is/are used to determine interference measurement of a sub-configuration.

In some embodiments, the terminal equipment further receives second CSI resource configuration information, the second CSI resource configuration information configuring at least one second CSI-RS resource set, each second CSI-RS resource set including a CSI-IM and/or NZP CSI-RS resource, wherein the CSI-IM and/or NZP CSI-RS resource is/are used to determine interference measurement of the M sub-configurations.

In some embodiments, the terminal equipment further receives second CSI resource configuration information, the second CSI resource configuration information configuring at least one second CSI-RS resource set, each second CSI-RS resource set including K CSI-IM and/or NZP CSI-RS resources, wherein the CSI-IM and/or NZP CSI-RS resources are used to determine interference measurement of the M sub-configurations.

In some embodiments, the terminal equipment further receives second CSI resource configuration information, the second CSI resource configuration information configuring at least one second CSI-RS resource set, each second CSI-RS resource set including Z CSI-IM and/or NZP CSI-RS resources, wherein each CSI-IM and/or NZP CSI-RS resource is/are used to determine interference measurement of a sub-configuration.

For example, for energy-saving scenario 1, if K CSI-RS resources are configured in each first CSI-RS resource set in a resource configuration are all used for channel measurement of M sub-configurations, CSI-RS resource configuration for interference measurement is performed in the following two modes:
1) configuring K CSI-IMs in a resource set (second CSI-RS resource set) for interference measurement, corresponding one-to-one with K CSI-IMs used for channel measurement, and each CSI-IM being used for interference measurement of neighbor cells under all sub-configurations;
2) configuring M*K CSI-IMs in a resource set (second CSI-RS resource set) for interference measurement, which are related to K CSI-RSs used for channel measurement, each CSI-IM being used for interference measurement of neighbor cells under one sub-configuration.

For example, for energy-saving scenario 2, if K CSI-RS resources are configured in each first CSI-RS resource set for channel measurement, and each CSI-RS resource is used for channel measurement of a sub-configuration, i.e. M=K, CSI-RS resource configuration for interference measurement is performed in the following two modes:
1) configuring K CSI-IMs in a resource set (second CSI-RS resource set) for interference measurement, corresponding one-to-one with K CSI-RSs used for channel measurement, and each CSI-IM being used for interference measurement of neighbor cells under a sub-configuration;
2) configuring one CSI-IM in a resource set (second CSI-RS resource set) for interference measurement, each CSI-IM being used for interference measurement of neighbor cells under all M sub-configurations.

For example, for energy-saving scenario 2, if Z*K resources are configured in each first CSI-RS resource set for channel measurement, and each resource in a CSI-RS resource group is used for channel measurement of one sub-configuration, i.e. M=Z, CSI-RS resource configuration for interference measurement is performed in a manner as follows: 1) configuring Z*K CSI-IMs in a resource set for interference measurement, which are related to Z*K CSI-IMs used for channel measurement, each CSI-IM being used for interference measurement of neighbor cells under a sub-configuration;
2) configuring a CSI-IM in a resource set (second CSI-RS resource set) for interference measurement, each CSI-IM being used for interference measurement of neighbor cells under all M sub-configurations;
3) configuring K CSI-IMs in a resource set (second CSI-RS resource set) for interference measurement, which are related to K CSI-RSs in each group used for channel measurement, each CSI-IM being used for interference measurement of neighbor cells under all M sub-configurations.

In some embodiments, the "energy-saving mode" may be replaced with a power-saving mode, or a sleep mode, or an abnormal mode, or an inactive mode, or a mode obtained after the network device adjusts a ratio of PDSCH energy per resource element (EPRE) to an energy per resource element (EPRE), or a mode obtained after the network device adjusts a CSI-RS resource configuration, or a mode obtained after the network device adjusts a CSI reporting configuration, or a mode obtained after spatial/energy domain elements are adjusted, etc.; however, it is not limited in this disclosure.

In some embodiments, that spatial domain elements are adjusted includes that the network device adjusts the number of spatial domain elements, and that energy domain elements are adjusted includes that the network device adjusts transmission power of a reference signal and/or transmission power of a data channel; however, it is not limited in this disclosure.

In some embodiments, the spatial domain elements include at least one of the following: an antenna, an antenna port, a logical port, a reference signal port, an antenna factor, an antenna element, and an antenna unit; and the energy domain elements include at least one of the following: reference signal transmission power, a reference signal transmission power offset, data channel transmission power, and a data channel transmission power offset; however, it is not limited in this disclosure.

In some embodiments, the reference signal related to spatial domain element and/or energy domain element adjustment used for radio link quality measurement is a synchronization signal block (SSB), or a periodic channel state information reference signal for tracking (CSI-RS for tracking), etc.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It can be seen from the above embodiment that the terminal equipment may accurately perform CSI reporting according to the first CSI-RS resource configuration information and/or the first CSI reporting configuration information, and the network device may correctly perform reception and demodulation on the received CSI, thereby improving accuracy and integrity of the measurement reporting, and ensuring performances of data transmission.

### Embodiments of a second aspect

The embodiments of this disclosure provide an information transmission method, which shall be described from a network device side. The embodiments of the second aspect may be combined with the embodiments of the first aspect, and contents identical to those in the embodiments of the first aspect shall not be repeated herein any further.

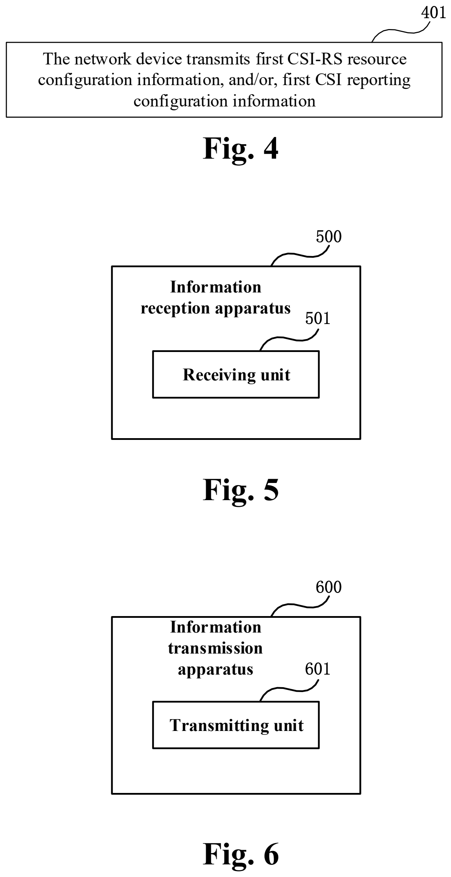

FIG. 4 is a schematic diagram of the information transmission method of the embodiments of this disclosure. As shown in FIG. 4, the method includes:
401: the network device transmits first CSI-RS resource configuration information, and/or, first CSI reporting configuration information,
wherein the first CSI-RS resource configuration information configures at least one first CSI-RS resource set, and each of the first CSI-RS resource sets includes at least one CSI-RS resource; the first CSI reporting configuration information at least configures first CSI reporting information to which M sub-configurations correspond; wherein the first CSI-RS resource configuration information is related to the first CSI reporting information to which the M sub-configurations correspond in the first reporting configuration information; where M is an integer greater than or equal to 1.

Therefore, the terminal equipment may accurately perform CSI reporting according to the first CSI-RS resource configuration information and/or the first CSI reporting configuration information, and the network device may correctly perform reception and demodulation on the received CSI, thereby improving accuracy and integrity of the measurement reporting, and ensuring performances of data transmission.

In some embodiments, the first CSI reporting configuration information at least includes one indication information, wherein the indication information indicates port information of the M sub-configurations.

In some embodiments, the first CSI reporting configuration information includes M indication information, *i-th* indication information in the M indication information including configuration information of Ni ports; where, a value range of i is an integer in {1, M}; wherein the *i-th* indication information indicates the number of ports of an *i-th* sub-configuration in the M sub-configurations, and numbers of ports of sub-configurations in the M sub-configurations are identical or different.

In some embodiments, the first CSI reporting configuration information includes one indication information, the one indication information indicating the number of ports of the M sub-configurations, wherein numbers of ports of the sub-configurations in the M sub-configurations are identical.

In some embodiments, each first CSI-RS resource set includes K CSI-RS resources, wherein each of the K CSI-RS resources is used to determine channel measurements of the M sub-configurations.

In some embodiments, each first CSI-RS resource set includes K CSI-RS resources; where, K=M, and one of the K CSI-RS resources is used to determine channel measurement of one of the M sub-configurations.

In some embodiments, each first CSI-RS resource set includes Z CSI-RS resource groups, each of the Z CSI-RS resource groups including K CSI-RS resources, wherein K CSI-RS resources in one of the Z CSI-RS resource groups are used to determine channel measurement of one of the M sub-configurations.

In some embodiments, Z=M, and the Z CSI-RS resource groups correspond one-to-one with the M sub-configurations.

In some embodiments, each first CSI-RS resource set includes Z CSI-RS resource groups, where Z=M, and the Z CSI-RS resource groups correspond to at least Y group pairing information, wherein one of the Y group pairing information indicates Z CSI-RS resources to which the Z CSI-RS resource groups correspond, and wherein one CSI-RS resource in the Z CSI-RS resources is used to determine channel measurement of one sub-configuration in the M sub-configurations.

In some embodiments, each first CSI-RS resource set includes Z CSI-RS resource groups, wherein each of the Z CSI-RS resource groups includes K CSI-RS resources; wherein,
each CSI-RS resource in a first one of CSI-RS resource groups of the Z CSI-RS resource groups is used to determine channel measurement of the M sub-configurations, and/or,
K CSI-RS resources in a CSI-RS resource group in the Z CSI-RS resource groups other than the first one of CSI-RS resource groups are used to determine channel measurement of a sub-configuration in the M sub-configurations.

In some embodiments, the first CSI-RS resource set includes at least K CSI-RS resources, wherein each of K1 CSI-RS resources in the K CSI-RS resources is used to determine channel measurement of the M sub-configurations, and/or, one of M CSI-RS resources in the K CSI-RS resources other than the K1 CSI-RS resources is used to determine channel measurement of one of the M sub-configurations; where, K1+M=K.

In some embodiments, the first CSI reporting configuration information at least indicates reporting one CSI-RS resource index value reporting quantity information.

In some embodiments, the one CSI-RS resource index value reporting quantity information is indicated by log (K) bits.

In some embodiments, the first CSI reporting configuration information at least indicates: not reporting the CSI-RS resource index value reporting quantity information, and/or, reporting X CSI-RS resource index value reporting quantity information.

In some embodiments, the X CSI-RS resource index value reporting quantity information are indicated by K bits; where, X<=K.

In some embodiments, the first CSI reporting configuration information at least indicates: reporting Z CSI-RS resource index value reporting quantity information, and/or, reporting P CSI-RS resource group index value reporting quantity information, and/or, reporting P resource index value reporting quantity information of CSI-RS resources in P CSI-RS resource groups.

In some embodiments, the Z CSI-RS resource index value reporting quantity information are indicated by Zlog (K) bits.

In some embodiments, the P CSI-RS resource group index value reporting quantity information are indicated by Z bits; where, P <= Z.

In some embodiments, the P CSI-RS resource group index value reporting quantity information are indicated by Plog (K)+Z bits.

In some embodiments, the first CSI reporting configuration information at least indicates: reporting one CSI-RS resource pairing index value reporting quantity information, and/or reporting S CSI-RS resource index value reporting quantity information in the one CSI-RS resource pairing index value reporting quantity information.

In some embodiments, the one CSI-RS resource pairing index value reporting quantity information is indicated by log (Y) bits.

In some embodiments, the S CSI-RS resource index value reporting quantity information are indicated by M bits; where, S<=M.

In some embodiments, the first CSI reporting configuration information at least indicates: reporting one CSI-RS resource pairing index value reporting quantity information, and/or, reporting 1+J CSI-RS index values.

In some embodiments, the one CSI-RS resource index value reporting quantity information is indicated by log (K1) bits.

In some embodiments, the 1+J CSI-RS resource index value reporting quantity information are indicated by log (K1)+M bits; where, J<=M.

In some embodiments, the network device further transmits second CSI resource configuration information, the second CSI resource configuration information configuring at least one second CSI-RS resource set, each second CSI-RS resource set including K CSI-IM and/or NZP CSI-RS resources, wherein each CSI-IM and/or NZP CSI-RS resource in the K CSI-IM and/or NZP CSI-RS resources is/are used to determine interference measurement of the M sub-configurations.

In some embodiments, the network device further transmits second CSI resource configuration information, the second CSI resource configuration information configuring at least one second CSI-RS resource set, each second CSI-RS resource set including M*K CSI-IM and/or NZP CSI-RS resources, wherein each CSI-IM and/or NZP CSI-RS resource in the K CSI-IM and/or NZP CSI-RS resources is/are used to determine interference measurements of a sub-configuration.

In some embodiments, the network device further transmits second CSI resource configuration information, the second CSI resource configuration information configuring at least one second CSI-RS resource set, each second CSI-RS resource set including K CSI-IM and/or NZP CSI-RS resources, wherein each CSI-IM and/or NZP CSI-RS resource in the K CSI-IM and/or NZP CSI-RS resources is/are used to determine interference measurement of a sub-configuration.

In some embodiments, the network device further transmits second CSI resource configuration information, the second CSI resource configuration information configuring at least one second CSI-RS resource set, each second CSI-RS resource set including a CSI-IM and/or NZP CSI-RS resource, wherein the CSI-IM and/or NZP CSI-RS resource is/are used to determine interference measurement of the M sub-configurations.

In some embodiments, the network device further transmits second CSI resource configuration information, the second CSI resource configuration information configuring at least one second CSI-RS resource set, each second CSI-RS resource set including Z*K CSI-IM and/or NZP CSI-RS resources, wherein each CSI-IM and/or NZP CSI-RS resource in the K CSI-IM and/or NZP CSI-RS resources is/are used to determine interference measurement of a sub-configuration.

In some embodiments, the network device further transmits second CSI resource configuration information, the second CSI resource configuration information configuring at least one second CSI-RS resource set, each second CSI-RS resource set including a CSI-IM and/or NZP CSI-RS resource, wherein the CSI-IM and/or NZP CSI-RS resource is/are used to determine interference measurement of the M sub-configurations.

In some embodiments, the network device further transmits second CSI resource configuration information, the second CSI resource configuration information configuring at least one second CSI-RS resource set, each second CSI-RS resource set including K CSI-IM and/or NZP CSI-RS resources, wherein the CSI-IM and/or NZP CSI-RS resources are used to determine interference measurement of the M sub-configurations.

In some embodiments, the network device further transmits second CSI resource configuration information, the second CSI resource configuration information configuring at least one second CSI-RS resource set, each second CSI-RS resource set including Z CSI-IM and/or NZP CSI-RS resources, wherein each CSI-IM and/or NZP CSI-RS resource is/are used to determine interference measurement of a sub-configuration.

It can be seen from the above embodiment that the terminal equipment may accurately perform CSI reporting according to the first CSI-RS resource configuration information and/or the first CSI reporting configuration information, and the network device may correctly perform reception and demodulation on the received CSI, thereby improving accuracy and integrity of the measurement reporting, and ensuring performances of data transmission.

### Embodiments of a third aspect

The embodiments of this disclosure provide an information reception apparatus. The apparatus may be, for example, a terminal equipment, or may be one or some components or assemblies configured in the terminal equipment, with contents identical to those in the embodiments of the first aspect being not going to be described herein any further.

FIG. 5 is a schematic diagram of information reception apparatus of the embodiments of this disclosure. As shown in FIG. 5, the information reception apparatus 500 includes:
a receiving unit 501 configured to receive first CSI-RS resource configuration information, and/or, first CSI reporting configuration information;
wherein the first CSI-RS resource configuration information configures at least one first CSI-RS resource set, each of the first CSI-RS resource sets including at least one CSI-RS resource; the first CSI reporting configuration information at least configures first CSI reporting information to which M sub-configurations correspond; wherein the first CSI-RS resource configuration information is related to the first CSI reporting information to which the M sub-configurations correspond in the first reporting configuration information; where, M is an integer greater than or equal to 1.

Hence, the terminal equipment may accurately perform CSI reporting according to the first CSI-RS resource configuration information and/or the first CSI reporting configuration information, and the network device may correctly perform reception and demodulation on the received CSI, thereby improving accuracy and integrity of the measurement reporting, and ensuring performances of data transmission.

In some embodiments, the first CSI reporting configuration information includes at least one indication information, wherein the indication information indicates port information of the M sub-configurations.

In some embodiments, the first CSI reporting configuration information includes M indication information, an *i-th* indication information in the M indication information including configuration information of Ni ports; where, the a value range of i is an integer in {1, M}; wherein the *i-th* indication information indicates the number of ports of an *i-th* sub-configuration in the M sub-configurations, wherein numbers of ports of each sub-configuration in the M sub-configurations are identical or different.

In some embodiments, the first CSI reporting configuration information includes one indication information, the one indication information indicating the number of ports of the M sub-configurations, wherein numbers of ports in each sub-configuration in the M sub-configurations are identical.

In some embodiments, each of the first CSI-RS resource sets includes K CSI-RS resources, wherein each CSI-RS resource in the K CSI-RS resources is used to determine channel measurement of the M sub-configurations.

In some embodiments, CSI-RS resources with which sub-configurations in the M sub-configurations are associated are identical, wherein the M sub-configurations are associated with all CSI-RS resources in the first CSI-RS resource set in the first CSI-RS resource configuration information.

In some embodiments, in the first CSI reporting configuration information to which the M sub-configurations correspond, a first part of sub-configurations in the M sub-configurations are configured with power offsets, and a second part of sub-configurations in the M sub-configurations are not configured with power offsets.

In some embodiments, in a case where the second part of sub-configurations in the M sub-configurations are not configured with power offsets, the terminal equipment determines that a value of a current power offset of the second part of sub-configurations is 0.

In some embodiments, in the first CSI reporting configuration information to which the M sub-configurations correspond, all of the M sub-configurations are configured with power offsets.

In some embodiments, each first CSI-RS resource set includes K CSI-RS resources; where, K=M, and one of the K CSI-RS resources is used to determine channel measurement of one of the M sub-configurations.

In some embodiments, each first CSI-RS resource set includes Z CSI-RS resource groups, wherein each of the Z CSI-RS resource groups includes K CSI-RS resources, K CSI-RS resources in a CSI-RS resource group in the Z CSI-RS resource groups being used to determine channel measurement of a sub-configuration in the M sub-configurations.

In some embodiments, each first CSI-RS resource set includes Z CSI-RS resource groups, wherein an *m-th* CSI-RS resource group in the Z CSI-RS resource groups are related to Zm CSI-RS resources in H CSI-RS resources; where, Zm is a positive integer and Zm≤H; where *m-th* sub-configuration information to which the *m-th* CSI-RS resource group corresponds includes CSI-RS resource identifiers (IDs) of the Zm CSI-RS resources; where, 1≤ m≤ M.

In some embodiments, none of the M sub-configurations is configured with a power offset in the first CSI reporting configuration information to which the M sub-configurations correspond.

In some embodiments, CSI-RS resources associated with sub-configurations in the M sub-configurations are orthogonal, wherein the M sub-configurations are associated with at least one CSI-RS resource in the first CSI-RS resource set in the first CSI-RS resource configuration information.

In some embodiments, in the first CSI reporting configuration information to which the M sub-configurations correspond, all of the M sub-configurations are configured with power offsets.

In some embodiments, CSI-RS resources associated with the sub-configurations in the M sub-configurations are orthogonal or identical.

In some embodiments, in case where the CSI-RS resources associated with the sub-configurations in the M sub-configurations are orthogonal, power offsets to which the M sub-configurations correspond are different or identical.

In some embodiments, in the first CSI reporting configuration information to which the M sub-configurations correspond, a first part of sub-configurations in the M sub-configurations are configured with power offsets, and a second part of sub-configurations in the M sub-configurations are not configured with power offsets.

In some embodiments, the CSI-RS resources associated with the sub-configurations in the M sub-configurations are orthogonal or identical.

In some embodiments, the terminal equipment reports N CSI-RS resource index (CRI) values; where, N is less than or equal to M. In some embodiments, the Z CSI-RS resource groups correspond to the M sub-configurations one by one.

In some embodiments, each first CSI-RS resource set includes Z CSI-RS resource groups, where Z=M, and the Z CSI-RS resource groups correspond to at least Y group pairing information, wherein one of the Y group pairing information indicates Z CSI-RS resources to which the Z CSI-RS resource groups correspond, and wherein one CSI-RS resource in the Z CSI-RS resources is used to determine channel measurement of one sub-configuration in the M sub-configurations.

In some embodiments, the first CSI-RS resource set includes at least K CSI-RS resources, wherein each of K1 CSI-RS resources in the K CSI-RS resources is used to determine channel measurement of the M sub-configurations, and/or, one of M CSI-RS resources in the K CSI-RS resources other than the K1 CSI-RS resources is used to determine channel measurement of one of the M sub-configurations; where, K1+M=K.

In some embodiments, the first CSI reporting configuration information at least indicates reporting one CSI-RS resource index value reporting quantity information.

In some embodiments, the one CSI-RS resource index value reporting quantity information is indicated by log (K) bits.

In some embodiments, the first CSI reporting configuration information at least indicates: not reporting the CSI-RS resource index value reporting quantity information, and/or, reporting X CSI-RS resource index value reporting quantity information.

In some embodiments, the X CSI-RS resource index value reporting quantity information are indicated by K bits; where, X<=K.

In some embodiments, the first CSI reporting configuration information at least indicates: reporting Z CSI-RS resource index value reporting quantity information, and/or, reporting P CSI-RS resource group index value reporting quantity information, and/or, reporting P resource index value reporting quantity information of CSI-RS resources in P CSI-RS resource groups.

In some embodiments, the Z SI-RS resource index value reporting quantity information are indicated by Zlog (K) bits.

In some embodiments, the P CSI-RS resource group index value reporting quantity information are indicated by Z bits; where, P <= Z.

In some embodiments, the P CSI-RS resource index value reporting quantity information are indicated by Plog (K)+Z bits.

In some embodiments, the first CSI reporting configuration information at least indicates: reporting one CSI-RS resource pairing index value reporting quantity information, and/or reporting S CSI-RS resource index value reporting quantity information in the one CSI-RS resource pairing index value reporting quantity information.

In some embodiments, the one CSI-RS resource pairing index value reporting quantity information is indicated by log (Y) bits.

In some embodiments, the S CSI-RS resource index value reporting quantity information are indicated by M bits; where, S<=M.

In some embodiments, the first CSI reporting configuration information at least indicates: reporting one CSI-RS resource pairing index value reporting quantity information, and/or, reporting 1+J CSI-RS index values.

In some embodiments, the one CSI-RS resource pairing index value reporting quantity information is indicated by log (K1) bits.

In some embodiments, the 1+J CSI-RS resource index value reporting quantity information are indicated by log (K1)+M bits; where, J<=M.

In some embodiments, the receiving unit 501 further receives second CSI resource configuration information, the second CSI resource configuration information configuring at least one second CSI-RS resource set, each second CSI-RS resource set including K CSI-IM and/or NZP CSI-RS resources, wherein each CSI-IM and/or NZP CSI-RS resource in the K CSI-IM and/or NZP CSI-RS resources is/are used to determine interference measurement of the M sub-configurations.

In some embodiments, the receiving unit 501 further receives second CSI resource configuration information, the second CSI resource configuration information configuring at least one second CSI-RS resource set, each second CSI-RS resource set including M*K CSI-IM and/or NZP CSI-RS resources, wherein each CSI-IM and/or NZP CSI-RS resource in the K CSI-IM and/or NZP CSI-RS resources is/are used to determine interference measurements of a sub-configuration.

In some embodiments, the receiving unit 501 further receives second CSI resource configuration information, the second CSI resource configuration information configuring at least one second CSI-RS resource set, each second CSI-RS resource set including K CSI-IM and/or NZP CSI-RS resources, wherein each CSI-IM and/or NZP CSI-RS resource in the K CSI-IM and/or NZP CSI-RS resources is/are used to determine interference measurement of a sub-configuration.

In some embodiments, the receiving unit 501 further receives second CSI resource configuration information, the second CSI resource configuration information configuring at least one second CSI-RS resource set, each second CSI-RS resource set including a CSI-IM and/or NZP CSI-RS resource, wherein the CSI-IM and/or NZP CSI-RS resource is/are used to determine interference measurement of the M sub-configurations.

In some embodiments, the receiving unit 501 further receives second CSI resource configuration information, the second CSI resource configuration information configuring at least one second CSI-RS resource set, each second CSI-RS resource set including Z*K CSI-IM and/or NZP CSI-RS resources, wherein each CSI-IM and/or NZP CSI-RS resource in the K CSI-IM and/or NZP CSI-RS resources is/are used to determine interference measurement of a sub-configuration.

In some embodiments, the receiving unit 501 further receives second CSI resource configuration information, the second CSI resource configuration information configuring at least one second CSI-RS resource set, each second CSI-RS resource set including a CSI-IM and/or NZP CSI-RS resource, wherein the CSI-IM and/or NZP CSI-RS resource is/are used to determine interference measurement of the M sub-configurations.

In some embodiments, the receiving unit 501 further receives second CSI resource configuration information, the second CSI resource configuration information configuring at least one second CSI-RS resource set, each second CSI-RS resource set including K CSI-IM and/or NZP CSI-RS resources, wherein the CSI-IM and/or NZP CSI-RS resources are used to determine interference measurement of the M sub-configurations.

In some embodiments, the receiving unit 501 further receives second CSI resource configuration information, the second CSI resource configuration information configuring at least one second CSI-RS resource set, each second CSI-RS resource set including Z CSI-IM and/or NZP CSI-RS resources, wherein each CSI-IM and/or NZP CSI-RS resource is/are used to determine interference measurement of a sub-configuration.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information reception apparatus 500 may further include other components or modules, and reference may be made to related techniques for particulars of these components or modules.

Furthermore, for the sake of simplicity, connection relationships between the components or modules or signal profiles thereof are only illustrated in FIG. 5. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiment that the terminal equipment may accurately perform CSI reporting according to the first CSI-RS resource configuration information and/or the first CSI reporting configuration information, and the network device may correctly perform reception and demodulation on the received CSI, thereby improving accuracy and integrity of the measurement reporting, and ensuring performances of data transmission.

### Embodiments of a fourth aspect

The embodiments of this disclosure provide an information transmission apparatus. The apparatus may be, for example, a network device, or may be one or some components or assemblies configured in the network device, with contents identical to those in the embodiments of the second aspect being not going to be described herein any further.

FIG. 6 is a schematic diagram of information transmission apparatus of the embodiments of this disclosure. As shown in FIG. 6, the information transmission apparatus 600 includes:
a transmitting unit 601 configured to transmit first CSI-RS resource configuration information, and/or, first CSI reporting configuration information;
wherein the first CSI-RS resource configuration information configures at least one first CSI-RS resource set, and each of the first CSI-RS resource sets includes at least one CSI-RS resource; the first CSI reporting configuration information at least configures first CSI reporting information to which M sub-configurations correspond; wherein the first CSI-RS resource configuration information is related to the first CSI reporting information to which the M sub-configurations correspond in the first reporting configuration information; where M is an integer greater than or equal to 1.

Therefore, the terminal equipment may accurately perform CSI reporting according to the first CSI-RS resource configuration information and/or the first CSI reporting configuration information, and the network device may correctly perform reception and demodulation on the received CSI, thereby improving accuracy and integrity of the measurement reporting, and ensuring performances of data transmission.

In some embodiments, the first CSI reporting configuration information at least includes one indication information, wherein the indication information indicates port information of the M sub-configurations.

In some embodiments, the first CSI reporting configuration information includes M indication information, *i-th* indication information in the M indication information including configuration information of Ni ports; where, a value range of i is an integer in {1, M}; wherein the *i-th* indication information indicates the number of ports of an *i-th* sub-configuration in the M sub-configurations, and numbers of ports of sub-configurations in the M sub-configurations are identical or different.

In some embodiments, the first CSI reporting configuration information includes one indication information, the one indication information indicating the number of ports of the M sub-configurations, wherein numbers of ports of the sub-configurations in the M sub-configurations are identical.

In some embodiments, each first CSI-RS resource set includes K CSI-RS resources, wherein each of the K CSI-RS resources is used to determine channel measurements of the M sub-configurations.

In some embodiments, each first CSI-RS resource set includes K CSI-RS resources; where, K=M, and one of the K CSI-RS resources is used to determine channel measurement of one of the M sub-configurations.

In some embodiments, each first CSI-RS resource set includes Z CSI-RS resource groups, each of the Z CSI-RS resource groups including K CSI-RS resources, wherein K CSI-RS resources in one of the Z CSI-RS resource groups are used to determine channel measurement of one of the M sub-configurations.

In some embodiments, Z=M, and the Z CSI-RS resource groups correspond one-to-one with the M sub-configurations.

In some embodiments, each first CSI-RS resource set includes Z CSI-RS resource groups, where Z=M, and the Z CSI-RS resource groups correspond to at least Y group pairing information, wherein one of the Y group pairing information indicates Z CSI-RS resources to which the Z CSI-RS resource groups correspond, and wherein one CSI-RS resource in the Z CSI-RS resources is used to determine channel measurement of one sub-configuration in the M sub-configurations.

In some embodiments, each first CSI-RS resource set includes Z CSI-RS resource groups, wherein each of the Z CSI-RS resource groups includes K CSI-RS resources; wherein each CSI-RS resource in a first one of CSI-RS resource groups of the Z CSI-RS resource groups is used to determine channel measurement of the M sub-configurations, and/or, K CSI-RS resources in a CSI-RS resource group in the Z CSI-RS resource groups other than the first one of CSI-RS resource groups are used to determine channel measurement of a sub-configuration in the M sub-configurations.

In some embodiments, the first CSI-RS resource set includes at least K CSI-RS resources, wherein each of K1 CSI-RS resources in the K CSI-RS resources is used to determine channel measurement of the M sub-configurations, and/or, one of M CSI-RS resources in the K CSI-RS resources other than the K1 CSI-RS resources is used to determine channel measurement of one of the M sub-configurations; where, K1+M=K.

In some embodiments, the first CSI reporting configuration information at least indicates reporting one CSI-RS resource index value reporting quantity information.

In some embodiments, the one CSI-RS resource index value reporting quantity information is indicated by log (K) bits.

In some embodiments, the first CSI reporting configuration information at least indicates: not reporting the CSI-RS resource index value reporting quantity information, and/or, reporting X CSI-RS resource index value reporting quantity information.

In some embodiments, the X CSI-RS resource index value reporting quantity information are indicated by K bits; where, X<=K_{∘}

In some embodiments, the first CSI reporting configuration information at least indicates: reporting Z CSI-RS resource index value reporting quantity information, and/or, reporting P CSI-RS resource group index value reporting quantity information, and/or, reporting P resource index value reporting quantity information of CSI-RS resources in P CSI-RS resource groups.

In some embodiments, the Z CSI-RS resource index value reporting quantity information are indicated by Zlog (K) bits.

In some embodiments, the P CSI-RS resource group index value reporting quantity information are indicated by Z bits; where, P <= Z.

In some embodiments, the P CSI-RS resource group index value reporting quantity information are indicated by Plog (K)+Z bits.

In some embodiments, the first CSI reporting configuration information at least indicates: reporting one CSI-RS resource pairing index value reporting quantity information, and/or reporting S CSI-RS resource index value reporting quantity information in the one CSI-RS resource pairing index value reporting quantity information.

In some embodiments, the one CSI-RS resource pairing index value reporting quantity information is indicated by log (Y) bits.

In some embodiments, the S CSI-RS resource index value reporting quantity information are indicated by M bits; where, S<=M.

In some embodiments, the first CSI reporting configuration information at least indicates: reporting one CSI-RS resource pairing index value reporting quantity information, and/or, reporting 1+J CSI-RS index values.

In some embodiments, the one CSI-RS resource index value reporting quantity information is indicated by log (K1) bits.

In some embodiments, the 1+J CSI-RS resource index value reporting quantity information are indicated by log (K1)+M bits; where, J<=M.

In some embodiments, the transmitting unit 601 further transmits second CSI resource configuration information, the second CSI resource configuration information configuring at least one second CSI-RS resource set, each second CSI-RS resource set including K CSI-IM and/or NZP CSI-RS resources, wherein each CSI-IM and/or NZP CSI-RS resource in the K CSI-IM and/or NZP CSI-RS resources is/are used to determine interference measurement of the M sub-configurations.

In some embodiments, the transmitting unit 601 further transmits second CSI resource configuration information, the second CSI resource configuration information configuring at least one second CSI-RS resource set, each second CSI-RS resource set including M*K CSI-IM and/or NZP CSI-RS resources, wherein each CSI-IM and/or NZP CSI-RS resource in the K CSI-IM and/or NZP CSI-RS resources is/are used to determine interference measurements of a sub-configuration.

In some embodiments, the transmitting unit 601 further transmits second CSI resource configuration information, the second CSI resource configuration information configuring at least one second CSI-RS resource set, each second CSI-RS resource set including K CSI-IM and/or NZP CSI-RS resources, wherein each CSI-IM and/or NZP CSI-RS resource in the K CSI-IM and/or NZP CSI-RS resources is/are used to determine interference measurement of a sub-configuration.

In some embodiments, the transmitting unit 601 further transmits second CSI resource configuration information, the second CSI resource configuration information configuring at least one second CSI-RS resource set, each second CSI-RS resource set including a CSI-IM and/or NZP CSI-RS resource, wherein the CSI-IM and/or NZP CSI-RS resource is/are used to determine interference measurement of the M sub-configurations.

In some embodiments, the transmitting unit 601 further transmits second CSI resource configuration information, the second CSI resource configuration information configuring at least one second CSI-RS resource set, each second CSI-RS resource set including Z*K CSI-IM and/or NZP CSI-RS resources, wherein each CSI-IM and/or NZP CSI-RS resource in the K CSI-IM and/or NZP CSI-RS resources is/are used to determine interference measurement of a sub-configuration.

In some embodiments, the transmitting unit 601 further transmits second CSI resource configuration information, the second CSI resource configuration information configuring at least one second CSI-RS resource set, each second CSI-RS resource set including a CSI-IM and/or NZP CSI-RS resource, wherein the CSI-IM and/or NZP CSI-RS resource is/are used to determine interference measurement of the M sub-configurations.

In some embodiments, the transmitting unit 601 further transmits second CSI resource configuration information, the second CSI resource configuration information configuring at least one second CSI-RS resource set, each second CSI-RS resource set including K CSI-IM and/or NZP CSI-RS resources, wherein the CSI-IM and/or NZP CSI-RS resources are used to determine interference measurement of the M sub-configurations.

In some embodiments, the transmitting unit 601 further transmits second CSI resource configuration information, the second CSI resource configuration information configuring at least one second CSI-RS resource set, each second CSI-RS resource set including Z CSI-IM and/or NZP CSI-RS resources, wherein each CSI-IM and/or NZP CSI-RS resource is/are used to determine interference measurement of a sub-configuration.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information transmission apparatus 600 may further include other components or modules, and reference may be made to related techniques for particulars of these components or modules.

Furthermore, for the sake of simplicity, connection relationships between the components or modules or signal profiles thereof are only illustrated in FIG. 6. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiment that the terminal equipment may accurately perform CSI reporting according to the first CSI-RS resource configuration information and/or the first CSI reporting configuration information, and the network device may correctly perform reception and demodulation on the received CSI, thereby improving accuracy and integrity of the measurement reporting, and ensuring performances of data transmission.

### Embodiments of a fifth aspect

The embodiments of this disclosure provide a communication system, and reference may be made to FIG. 1, with contents identical to those in the embodiments of the first to the fourth aspects being not going to be described herein any further.

In some embodiments, the communication system 100 may at least include:
a terminal equipment configured to carry out the information reception method in the embodiments of the first aspect; and
a network device configured to carry out the information transmission method in the embodiments of the second aspect.

The embodiments of this disclosure further provide a network device, which may be, for example, a base station. However, this disclosure is not limited thereto, and it may also be another network device.

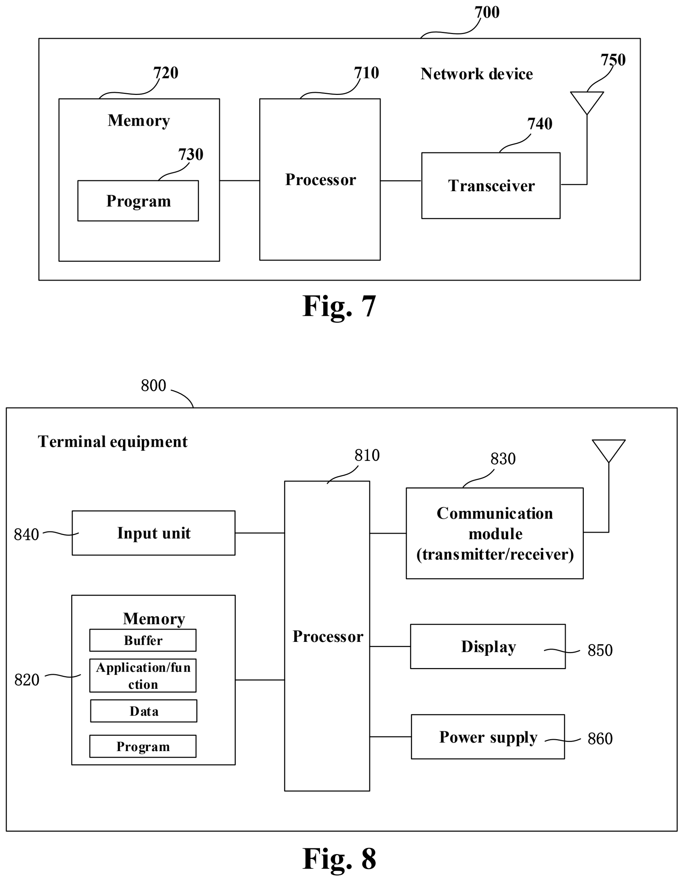

FIG. 7 is a schematic diagram of the network device of the embodiments of this disclosure. As shown in FIG. 7, the network device 700 may include a processor 710 (such as a central processing unit (CPU)) and a memory 720, the memory 720 being coupled to the processor 710. Wherein, the memory 720 may store various data, and furthermore, it may store a program 730 for information processing, and execute the program 730 under control of the processor 710.

Furthermore, as shown in FIG. 7, the network device 700 may include a transceiver 740, and an antenna 750, etc. Wherein, functions of the above components are similar to those in the related art, and shall not be described herein any further. It should be noted that the network device 700 does not necessarily include all the parts shown in FIG. 7, and furthermore, the network device 700 may include parts not shown in FIG. 7, and the related art may be referred to.

The embodiments of this disclosure further provide a terminal equipment; however, this disclosure is not limited thereto, and it may also be another equipment.

FIG. 8 is a schematic diagram of the terminal equipment of the embodiments of this disclosure. As shown in FIG. 8, the terminal equipment may include a processor 810 and a memory 820, the memory 820 storing data and a program and being coupled to the processor 810. It should be noted that this figure is illustrative only, and other types of structures may also be used, so as to supplement or replace this structure and achieve a telecommunications function or other functions.

For example, the processor 810 may be configured to execute a program to carry out the information reception method in the embodiments of the first aspect. For example, the processor 810 may be configured to perform the following control: receiving first CSI-RS resource configuration information, and/or, first CSI reporting configuration information, by the terminal equipment; wherein the first CSI-RS resource configuration information configures at least one first CSI-RS resource set, each of the first CSI-RS resource sets including at least one CSI-RS resource; the first CSI reporting configuration information at least configures first CSI reporting information to which M sub-configurations correspond; wherein the first CSI-RS resource configuration information is related to the first CSI reporting information to which the M sub-configurations correspond in the first reporting configuration information; where, M is an integer greater than or equal to 1.

As shown in FIG. 8, the terminal equipment 800 may further include a communication module 830, an input unit 840, a display 850, and a power supply 860; wherein functions of the above components are similar to those in the related art, which shall not be described herein any further. It should be noted that the terminal equipment 800 does not necessarily include all the parts shown in FIG. 8, and the above components are not necessary. Furthermore, the terminal equipment 800 may include parts not shown in FIG. 8, and the related art may be referred to.

Embodiments of this disclosure provide a computer program, which, when executed in a terminal equipment, will cause the terminal equipment to carry out the information reception method as described in the embodiments of the first aspect.

Embodiments of this disclosure provide a computer storage medium, including a computer program, which will cause a terminal equipment to carry out the information reception method as described in the embodiments of the first aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the spirits and principle of this disclosure, and such variants and modifications fall within the scope of this disclosure.

As to implementations containing the above embodiments, following supplements are further disclosed.

A method at a terminal equipment side
1. An information reception method, applicable to a terminal equipment, the method including:
   receiving first CSI-RS resource configuration information, and/or, first CSI reporting configuration information, by the terminal equipment;
   wherein the first CSI-RS resource configuration information configures at least one first CSI-RS resource set, each of the first CSI-RS resource sets including at least one CSI-RS resource;
   the first CSI reporting configuration information at least configures first CSI reporting information to which M sub-configurations correspond; wherein the first CSI-RS resource configuration information is related to the first CSI reporting information to which the M sub-configurations correspond in the first reporting configuration information; where, M is an integer greater than or equal to 1.
2. The method according to supplement 1, wherein the first CSI reporting configuration information includes at least one indication information, wherein the indication information indicates port information of the M sub-configurations.
3. The method according to supplement 2, wherein the first CSI reporting configuration information includes M indication information, an *i-th* indication information in the M indication information including configuration information of Ni ports; where, the a value range of i is an integer in {1, M}; wherein the *i-th* indication information indicates the number of ports of an *i-th* sub-configuration in the M sub-configurations, wherein numbers of ports of each sub-configuration in the M sub-configurations are identical or different.
4. The method according to supplement 2, wherein the first CSI reporting configuration information includes one indication information, the one indication information indicating the number of ports of the M sub-configurations, wherein numbers of ports in each sub-configuration in the M sub-configurations are identical.
5. The method according to supplement 3, wherein each of the first CSI-RS resource sets includes K CSI-RS resources, wherein each CSI-RS resource in the K CSI-RS resources is used to determine channel measurement of the M sub-configurations.
6. The method according to supplement 4, wherein each first CSI-RS resource set includes K CSI-RS resources; where, K=M, and one of the K CSI-RS resources is used to determine channel measurement of one of the M sub-configurations.
7. The method according to supplement 4, wherein each first CSI-RS resource set includes Z CSI-RS resource groups, wherein each of the Z CSI-RS resource groups includes K CSI-RS resources, K CSI-RS resources in a CSI-RS resource group in the Z CSI-RS resource groups being used to determine channel measurement of a sub-configuration in the M sub-configurations.
8. The method according to supplement 7, wherein Z=M, and the Z CSI-RS resource groups correspond to the M sub-configurations.
9. The method according to supplement 4, wherein each first CSI-RS resource set includes Z CSI-RS resource groups, where Z=M, and the Z CSI-RS resource groups correspond to at least Y group pairing information, wherein one of the Y group pairing information indicates Z CSI-RS resources to which the Z CSI-RS resource groups correspond, and wherein one CSI-RS resource in the Z CSI-RS resources is used to determine channel measurement of one sub-configuration in the M sub-configurations.
10. The method according to supplement 4, wherein each first CSI-RS resource set includes Z CSI-RS resource groups, each of the Z CSI-RS resource groups containing K CSI-RS resources, wherein,
   each CSI-RS resource in a first one of CSI-RS resource groups of the Z CSI-RS resource groups is used to determine channel measurement of the M sub-configurations, and/or,
   K CSI-RS resources in a CSI-RS resource group in the Z CSI-RS resource groups other than the first one of CSI-RS resource groups are used to determine channel measurement of a sub-configuration in the M sub-configurations.
11. The method according to supplement 4, wherein the first CSI-RS resource set includes at least K CSI-RS resources, wherein,
   each of K1 CSI-RS resources in the K CSI-RS resources is used to determine channel measurement of the M sub-configurations, and/or,
   one of M CSI-RS resources in the K CSI-RS resources other than the K1 CSI-RS resources is used to determine channel measurement of one of the M sub-configurations; where, K1+M=K.
12. The method according to supplement 5, wherein the first CSI reporting configuration information at least indicates reporting one CSI-RS resource index value reporting quantity information.
13. The method according to supplement 12, wherein the one CSI-RS resource index value reporting quantity information is indicated by log (K) bits.
14. The method according to supplement 6, wherein the first CSI reporting configuration information at least indicates: not reporting the CSI-RS resource index value reporting quantity information, and/or, reporting X CSI-RS resource index value reporting quantity information.
15. The method according to supplement 14, wherein the X CSI-RS resource index value reporting quantity information are indicated by K bits; where, X<=K.
16. The method according to supplement 8, wherein the first CSI reporting configuration information at least indicates: reporting Z CSI-RS resource index value reporting quantity information, and/or, reporting P CSI-RS resource group index value reporting quantity information, and/or, reporting P resource index value reporting quantity information of CSI-RS resources in P CSI-RS resource groups.
17. The method according to supplement 16, wherein the Z CSI-RS resource index value reporting quantity information are indicated by Zlog (K) bits.
18. The method according to supplement 16, wherein the P CSI-RS resource group index value reporting quantity information are indicated by Z bits; where, P <= Z.
19. The method according to supplement 18, wherein the P CSI-RS resource index value reporting quantity information are indicated by Plog (K)+Z bits.
20. The method according to supplement 9, wherein the first CSI reporting configuration information at least indicates: reporting one CSI-RS resource pairing index value reporting quantity information, and/or reporting S CSI-RS resource index value reporting quantity information in the one CSI-RS resource pairing index value reporting quantity information.
21. The method according to supplement 20, wherein the one CSI-RS resource pairing index value reporting quantity information is indicated by log (Y) bits.
22. The method according to supplement 21, wherein the S CSI-RS resource index value reporting quantity information are indicated by M bits; where, S<=M.
23. The method according to supplement 11, wherein the first CSI reporting configuration information at least indicates: reporting one CSI-RS resource pairing index value reporting quantity information, and/or, reporting 1+J CSI-RS index values.
24. The method according to supplement 23, wherein the one CSI-RS resource index value reporting quantity information is indicated by log (K1) bits.
25. The method according to supplement 24, wherein the 1+J CSI-RS resource index value reporting quantity information are indicated by log (K1)+M bits; where, J<=M.
26. The method according to supplement 5, wherein the terminal equipment further receives second CSI resource configuration information, the second CSI resource configuration information configuring at least one second CSI-RS resource set, each second CSI-RS resource set including K CSI-IM and/or NZP CSI-RS resources, wherein each CSI-IM and/or NZP CSI-RS resource in the K CSI-IM and/or NZP CSI-RS resources is/are used to determine interference measurement of the M sub-configurations.
27. The method according to supplement 5, wherein the terminal equipment further receives second CSI resource configuration information, the second CSI resource configuration information configuring at least one second CSI-RS resource set, each second CSI-RS resource set including M*K CSI-IM and/or NZP CSI-RS resources, wherein each CSI-IM and/or NZP CSI-RS resource in the K CSI-IM and/or NZP CSI-RS resources is/are used to determine interference measurements of a sub-configuration.
28. The method according to supplement 6, wherein the terminal equipment further receives second CSI resource configuration information, the second CSI resource configuration information configuring at least one second CSI-RS resource set, each second CSI-RS resource set including K CSI-IM and/or NZP CSI-RS resources, wherein each CSI-IM and/or NZP CSI-RS resource in the K CSI-IM and/or NZP CSI-RS resources is/are used to determine interference measurement of a sub-configuration.
29. The method according to supplement 6, wherein the terminal equipment further receives second CSI resource configuration information, the second CSI resource configuration information configuring at least one second CSI-RS resource set, each second CSI-RS resource set including a CSI-IM and/or NZP CSI-RS resource, wherein the CSI-IM and/or NZP CSI-RS resource is/are used to determine interference measurement of the M sub-configurations.
30. The method according to supplement 7, wherein the terminal equipment further receives second CSI resource configuration information, the second CSI resource configuration information configuring at least one second CSI-RS resource set, each second CSI-RS resource set including Z*K CSI-IM and/or NZP CSI-RS resources, wherein each CSI-IM and/or NZP CSI-RS resource in the K CSI-IM and/or NZP CSI-RS resources is/are used to determine interference measurement of a sub-configuration.
31. The method according to supplement 7, wherein the terminal equipment further receives second CSI resource configuration information, the second CSI resource configuration information configuring at least one second CSI-RS resource set, each second CSI-RS resource set including a CSI-IM and/or NZP CSI-RS resource, wherein the CSI-IM and/or NZP CSI-RS resource is/are used to determine interference measurement of the M sub-configurations.
32. The method according to supplement 7, wherein the terminal equipment further receives second CSI resource configuration information, the second CSI resource configuration information configuring at least one second CSI-RS resource set, each second CSI-RS resource set including K CSI-IM and/or NZP CSI-RS resources, wherein the CSI-IM and/or NZP CSI-RS resources are used to determine interference measurement of the M sub-configurations.
33. The method according to supplement 7, wherein the terminal equipment further receives second CSI resource configuration information, the second CSI resource configuration information configuring at least one second CSI-RS resource set, each second CSI-RS resource set including Z CSI-IM and/or NZP CSI-RS resources, wherein each CSI-IM and/or NZP CSI-RS resource is/are used to determine interference measurement of a sub-configuration.
34. The method according to supplement 5, wherein CSI-RS resources with which each sub-configuration in the M sub-configurations is associated are identical, wherein the M sub-configurations are associated with all CSI-RS resources in the first CSI-RS resource set in the first CSI-RS resource configuration information.
35. The method according to supplement 34, wherein in the first CSI reporting configuration information to which the M sub-configurations correspond, a first part of sub-configurations in the M sub-configurations are configured with power offset, while a second part of sub-configurations in the M sub-configurations are not configured with power offset.
36. The method according to supplement 35, wherein in a case where the second part of sub-configurations in the M sub-configurations are not configured with power offsets, the terminal equipment determines that a value of a current power offset of the second part of sub-configurations is 0.
37. The method according to supplement 34, wherein in the first CSI reporting configuration information to which the M sub-configurations correspond, all of the M sub-configurations are configured with power offsets.
38. The method according to supplement 4, wherein each first CSI-RS resource set includes Z CSI-RS resource groups, wherein an *m-th* CSI-RS resource group in the Z CSI-RS resource groups are related to Zm CSI-RS resources in H CSI-RS resources; where, Zm is a positive integer and Zm≤H; where *m-th* sub-configuration information to which the *m-th* CSI-RS resource group corresponds includes CSI-RS resource identifiers (IDs) of the Zm CSI-RS resources; where, 1≤ m≤ M.
39. The method according to supplement 38, wherein in the first CSI reporting configuration information to which the M sub-configurations correspond, none of the M sub-configurations are configured with power offsets.
40. The method according to supplement 39, wherein CSI-RS resources with which each of the M sub-configurations is associated are orthogonal, wherein the M sub-configurations are associated with at least one CSI-RS resource in the first CSI-RS resource set in the first CSI-RS resource configuration information.
41. The method according to supplement 38, wherein in the first CSI reporting configuration information to which the M sub-configurations correspond, all of the M sub-configurations are configured with power offsets.
42. The method according to supplement 41, wherein CSI-RS resources associated with the sub-configurations in the M sub-configurations are orthogonal or identical.
43. The method according to supplement 42, wherein in a case where the CSI-RS resources associated with each sub-configuration in the M sub-configurations are orthogonal, the power offsets to which the M sub-configurations correspond are different or identical.
44. The method according to supplement 42, wherein in a case where the CSI-RS resources associated with each sub-configuration in the M sub-configurations are identical, the power offsets to which the M sub-configurations correspond are different.
45. The method according to supplement 38, wherein in the first CSI reporting configuration information to which the M sub-configurations correspond, a first part of sub-configurations in the M sub-configurations are configured with power offset, while a second part of sub-configurations in the M sub-configurations are not configured with power offset.
46. The method according to supplement 45, wherein CSI-RS resources associated with the sub-configurations in the M sub-configurations are orthogonal or identical.
47. The method according to supplement 38, wherein the terminal equipment reports N CSI-RS resource index (CRI) values, where N is less than or equal to M.

A method at a network device side
1. An information transmission method, applicable to a network device, the method including:
   transmitting first CSI-RS resource configuration information, and/or, first CSI reporting configuration information, by the network device,
   wherein the first CSI-RS resource configuration information configures at least one first CSI-RS resource set, and each of the first CSI-RS resource sets includes at least one CSI-RS resource; the first CSI reporting configuration information at least configures first CSI reporting information to which M sub-configurations correspond; wherein the first CSI-RS resource configuration information is related to the first CSI reporting information to which the M sub-configurations correspond in the first reporting configuration information; where M is an integer greater than or equal to 1.
2. The method according to supplement 1, wherein the first CSI reporting configuration information at least includes one indication information, wherein the indication information indicates port information of the M sub-configurations.
3. The method according to supplement 2, wherein the first CSI reporting configuration information includes M indication information, *i-th* indication information in the M indication information including configuration information of Ni ports; where, a value range of i is an integer in {1, M}; wherein the *i-th* indication information indicates the number of ports of an *i-th* sub-configuration in the M sub-configurations, and numbers of ports of sub-configurations in the M sub-configurations are identical or different.
4. The method according to supplement 2, wherein the first CSI reporting configuration information includes one indication information, the one indication information indicating the number of ports of the M sub-configurations, wherein numbers of ports of the sub-configurations in the M sub-configurations are identical.
5. The method according to supplement 3, wherein each first CSI-RS resource set includes K CSI-RS resources, wherein each of the K CSI-RS resources is used to determine channel measurements of the M sub-configurations.
6. The method according to supplement 4, wherein each first CSI-RS resource set includes K CSI-RS resources; where, K=M, and one of the K CSI-RS resources is used to determine channel measurement of one of the M sub-configurations.
7. The method according to supplement 4, wherein each first CSI-RS resource set includes Z CSI-RS resource groups, each of the Z CSI-RS resource groups including K CSI-RS resources, wherein K CSI-RS resources in one of the Z CSI-RS resource groups are used to determine channel measurement of one of the M sub-configurations.
8. The method according to supplement 7, wherein Z=M, and the Z CSI-RS resource groups correspond one-to-one with the M sub-configurations.
9. The method according to supplement 4, wherein each first CSI-RS resource set includes Z CSI-RS resource groups, where Z=M, and the Z CSI-RS resource groups correspond to at least Y group pairing information, wherein one of the Y group pairing information indicates Z CSI-RS resources to which the Z CSI-RS resource groups correspond, and wherein one CSI-RS resource in the Z CSI-RS resources is used to determine channel measurement of one sub-configuration in the M sub-configurations.
10. The method according to supplement 4, wherein each first CSI-RS resource set includes Z CSI-RS resource groups, wherein each of the Z CSI-RS resource groups includes K CSI-RS resources; wherein,
   each CSI-RS resource in a first one of CSI-RS resource groups of the Z CSI-RS resource groups is used to determine channel measurement of the M sub-configurations, and/or,
   K CSI-RS resources in a CSI-RS resource group in the Z CSI-RS resource groups other than the first one of CSI-RS resource groups are used to determine channel measurement of a sub-configuration in the M sub-configurations.
11. The method according to supplement 4, wherein the first CSI-RS resource set includes at least K CSI-RS resources, wherein each of K1 CSI-RS resources in the K CSI-RS resources is used to determine channel measurement of the M sub-configurations, and/or, one of M CSI-RS resources in the K CSI-RS resources other than the K1 CSI-RS resources is used to determine channel measurement of one of the M sub-configurations; where, K1+M=K.
12. The method according to supplement 5, wherein the first CSI reporting configuration information at least indicates reporting one CSI-RS resource index value reporting quantity information.
13. The method according to supplement 12, wherein the one CSI-RS resource index value reporting quantity information is indicated by log (K) bits.
14. The method according to supplement 6, wherein the first CSI reporting configuration information at least indicates: not reporting the CSI-RS resource index value reporting quantity information, and/or, reporting X CSI-RS resource index value reporting quantity information.
15. The method according to supplement 14, wherein the X CSI-RS resource index value reporting quantity information are indicated by K bits; where, X<=K_{∘}
16. The method according to supplement 8, wherein the first CSI reporting configuration information at least indicates: reporting Z CSI-RS resource index value reporting quantity information, and/or, reporting P CSI-RS resource group index value reporting quantity information, and/or, reporting P resource index value reporting quantity information of CSI-RS resources in P CSI-RS resource groups.
17. The method according to supplement 16, wherein the Z CSI-RS resource index value reporting quantity information are indicated by Zlog (K) bits.
18. The method according to supplement 16, wherein the P CSI-RS resource group index value reporting quantity information are indicated by Z bits; where, P <= Z_{∘}
19. The method according to supplement 18, wherein the P CSI-RS resource group index value reporting quantity information are indicated by Plog (K)+Z bits.
20. The method according to supplement 9, wherein the first CSI reporting configuration information at least indicates: reporting one CSI-RS resource pairing index value reporting quantity information, and/or reporting S CSI-RS resource index value reporting quantity information in the one CSI-RS resource pairing index value reporting quantity information.
21. The method according to supplement 20, wherein the one CSI-RS resource pairing index value reporting quantity information is indicated by log (Y) bits.
22. The method according to supplement 21, wherein the S CSI-RS resource index value reporting quantity information are indicated by M bits; where, S<=M.
23. The method according to supplement 11, wherein the first CSI reporting configuration information at least indicates: reporting one CSI-RS resource pairing index value reporting quantity information, and/or, reporting 1+J CSI-RS index values.
24. The method according to supplement 23, wherein the one CSI-RS resource index value reporting quantity information is indicated by log (K1) bits.
25. The method according to supplement 24, wherein the 1+J CSI-RS resource index value reporting quantity information are indicated by log (K1)+M bits; where, J<=M.
26. The method according to supplement 5, wherein the network device further transmits second CSI resource configuration information, the second CSI resource configuration information configuring at least one second CSI-RS resource set, each second CSI-RS resource set including K CSI-IM and/or NZP CSI-RS resources, wherein each CSI-IM and/or NZP CSI-RS resource in the K CSI-IM and/or NZP CSI-RS resources is/are used to determine interference measurement of the M sub-configurations.
27. The method according to supplement 5, wherein the network device further transmits second CSI resource configuration information, the second CSI resource configuration information configuring at least one second CSI-RS resource set, each second CSI-RS resource set including M*K CSI-IM and/or NZP CSI-RS resources, wherein each CSI-IM and/or NZP CSI-RS resource in the K CSI-IM and/or NZP CSI-RS resources is/are used to determine interference measurements of a sub-configuration.
28. The method according to supplement 6, wherein the network device further transmits second CSI resource configuration information, the second CSI resource configuration information configuring at least one second CSI-RS resource set, each second CSI-RS resource set including K CSI-IM and/or NZP CSI-RS resources, wherein each CSI-IM and/or NZP CSI-RS resource in the K CSI-IM and/or NZP CSI-RS resources is/are used to determine interference measurement of a sub-configuration.
29. The method according to supplement 6, wherein the network device further transmits second CSI resource configuration information, the second CSI resource configuration information configuring at least one second CSI-RS resource set, each second CSI-RS resource set including a CSI-IM and/or NZP CSI-RS resource, wherein the CSI-IM and/or NZP CSI-RS resource is/are used to determine interference measurement of the M sub-configurations.
30. The method according to supplement 7, wherein the network device further transmits second CSI resource configuration information, the second CSI resource configuration information configuring at least one second CSI-RS resource set, each second CSI-RS resource set including Z*K CSI-IM and/or NZP CSI-RS resources, wherein each CSI-IM and/or NZP CSI-RS resource in the K CSI-IM and/or NZP CSI-RS resources is/are used to determine interference measurement of a sub-configuration.
31. The method according to supplement 7, wherein the network device further transmits second CSI resource configuration information, the second CSI resource configuration information configuring at least one second CSI-RS resource set, each second CSI-RS resource set including a CSI-IM and/or NZP CSI-RS resource, wherein the CSI-IM and/or NZP CSI-RS resource is/are used to determine interference measurement of the M sub-configurations.
32. The method according to supplement 7, wherein the network device further transmits second CSI resource configuration information, the second CSI resource configuration information configuring at least one second CSI-RS resource set, each second CSI-RS resource set including K CSI-IM and/or NZP CSI-RS resources, wherein the CSI-IM and/or NZP CSI-RS resources are used to determine interference measurement of the M sub-configurations.
33. The method according to supplement 7, wherein the network device further transmits second CSI resource configuration information, the second CSI resource configuration information configuring at least one second CSI-RS resource set, each second CSI-RS resource set including Z CSI-IM and/or NZP CSI-RS resources, wherein each CSI-IM and/or NZP CSI-RS resource is/are used to determine interference measurement of a sub-configuration.

## Claims

1. An information reception apparatus, configured in a terminal equipment, the apparatus comprising:
a receiving unit configured to receive first CSI-RS resource configuration information, and/or, first CSI reporting configuration information;
wherein the first CSI-RS resource configuration information configures at least one first CSI-RS resource set, each of the first CSI-RS resource sets comprising at least one CSI-RS resource; the first CSI reporting configuration information at least configures first CSI reporting information to which M sub-configurations correspond; wherein the first CSI-RS resource configuration information is related to the first CSI reporting information to which the M sub-configurations correspond in the first reporting configuration information; where, M is an integer greater than or equal to 1.

2. The apparatus according to claim 1, wherein the first CSI reporting configuration information comprises at least one indication information, wherein the indication information indicates port information of the M sub-configurations.

3. The apparatus according to claim 2, wherein each of the first CSI-RS resource sets comprises K CSI-RS resources, wherein each CSI-RS resource in the K CSI-RS resources is used to determine channel measurement of the M sub-configurations.

4. The apparatus according to claim 3, wherein CSI-RS resources with which sub-configurations in the M sub-configurations are associated are identical, wherein the M sub-configurations are associated with all CSI-RS resources in the first CSI-RS resource set in the first CSI-RS resource configuration information.

5. The apparatus according to claim 4, wherein in the first CSI reporting configuration information to which the M sub-configurations correspond, a first part of sub-configurations in the M sub-configurations are configured with a power offset, and a second part of sub-configurations in the M sub-configurations are not configured with a power offset.

6. The apparatus according to claim 5, wherein in a case where the second part of sub-configurations in the M sub-configurations are not configured with power offsets, the terminal equipment determines that a value of a current power offset of the second part of sub-configurations is 0.

7. The apparatus according to claim 4, wherein in the first CSI reporting configuration information to which the M sub-configurations correspond, all of the M sub-configurations are configured with power offsets.

8. The apparatus according to claim 2, wherein each of the first CSI-RS resource sets comprises Z CSI-RS resource groups, wherein the *m-th* CSI-RS resource group in the Z CSI-RS resource groups is related to Zm CSI-RS resources in H CSI-RS resources, where Zm is a positive integer, and Zm≤H; wherein the *m-th* sub-configuration information to which the *m-th* CSI-RS resource group corresponds comprises a CSI-RS resource identifiers (IDs) of the Zm CSI-RS resources, where 1≤m≤M.

9. The apparatus according to claim 8, wherein none of the M sub-configurations is configured with a power offset in the first CSI reporting configuration information to which the M sub-configurations correspond.

10. The apparatus according to claim 9, wherein CSI-RS resources with which each of the M sub-configurations is associated are orthogonal, wherein the M sub-configurations are associated with at least one CSI-RS resource in the first CSI-RS resource set in the first CSI-RS resource configuration information.

11. The apparatus according to claim 8, wherein in the first CSI reporting configuration information to which the M sub-configurations correspond, all of the M sub-configurations are configured with power offsets.

12. The apparatus according to claim 11, wherein CSI-RS resources with which each of the M sub-configurations is associated are orthogonal or identical.

13. The apparatus according to claim 12, wherein in case where the CSI-RS resources associated with each sub-configuration in the M sub-configurations are orthogonal, the power offsets to which the M sub-configurations correspond are different or identical.

14. The apparatus according to claim 12, wherein in case where CSI-RS resources associated with each sub-configuration in the M sub-configurations are identical, power offsets to which the M sub-configurations correspond are different.

15. The apparatus according to claim 8, wherein in the first CSI reporting configuration information to which the M sub-configurations correspond, a first part of sub-configurations in the M sub-configurations are configured with power offsets, and a second part of sub-configurations in the M sub-configurations are not configured with power offsets.

16. The apparatus according to claim 15, wherein the CSI-RS resources associated with each of the M sub-configurations are orthogonal or identical.

17. The apparatus according to claim 8, wherein the terminal equipment reports N CSI-RS resource index (CRI) values, where N is less than or equal to M.

18. The apparatus according to claim 8, wherein Z=M, and the Z CSI-RS resource groups correspond to the M sub-configurations one by one.

19. The apparatus according to claim 3, wherein the first CSI reporting configuration information at least indicates reporting one CSI-RS resource index value reporting quantity information.

20. An information transmission apparatus, configured in a network device, the apparatus comprising:
a transmitting unit configured to transmit first CSI-RS resource configuration information, and/or, first CSI reporting configuration information;
wherein the first CSI-RS resource configuration information configures at least one first CSI-RS resource set, and each of the first CSI-RS resource sets comprises at least one CSI-RS resource;
the first CSI reporting configuration information at least configures first CSI reporting information to which M sub-configurations correspond; wherein the first CSI-RS resource configuration information is related to the first CSI reporting information to which the M sub-configurations correspond in the first reporting configuration information; where M is an integer greater than or equal to 1.
